(19) Europäisches Patentamt
European Patent Office
Office européen des brevets

(11) EP 0 575 134 B1

## (12) EUROPEAN PATENT SPECIFICATION

(45) Date of publication and mention
of the grant of the patent:
**23.02.2000 Bulletin 2000/08**

(51) Int. Cl.⁷: **G06K 15/00**

(21) Application number: **93304610.4**

(22) Date of filing: **14.06.1993**

(54) **Method and apparatus for printing according to a graphic language**

Verfahren und Gerät zum Drucken nach einer grafischen Sprache

Méthode et dispositif d'impression selon un langage graphique

(84) Designated Contracting States:
**DE FR GB IT SE**

(30) Priority: **15.06.1992 US 898532**
**08.07.1992 US 911030**

(43) Date of publication of application:
**22.12.1993 Bulletin 1993/51**

(73) Proprietor:
**CANON KABUSHIKI KAISHA**
**Tokyo (JP)**

(72) Inventors:
• **Pardo, Luis Trabb**
**Palo Alto, CA 94306 (US)**
• **Phillips, Jorge**
**Menlo Park, CA 94025 (US)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 438 246       EP-A- 0 467 598**
**EP-A- 0 470 782       EP-A- 0 474 153**
**EP-A- 0 480 638       US-A- 5 084 831**

• **PATENT ABSTRACTS OF JAPAN vol. 14, no. 345**
**(P-1083) 26 July 1990 & JP-A-02 123 486**
**(TOSHIBA CORP) 10 May 1990**

**Description**

BACKGROUND OF THE INVENTION

Field Of The Invention

The present invention relates to a method and apparatus for printing an image in accordance with a graphics language stream.

Description Of The Related Art

Recently, printing apparatus such as laser beam printers which form images by selectively printing pixels on a page have become exceedingly popular because of their flexibility, printing speed and low cost. Such printing apparatuses print images by scanning across a page while selectively printing individual pixels on the scan line. The page is advanced (in printers like laser beam printers the page is advanced continuously while printing) and additional scan lines are formed. The collection of printed pixels from all the scan lines on the page forms the desired image.

Whether pixels are printed on the page, and where those pixels are printed during a scanning operation, are determined by a printer controller which operates in accordance with a stored raster image of the print image. A raster is a computer representation of each of the pixels in the print image, and is stored in bit map memory in the controller. In a bit map memory, there is a one-for-one correspondence between pixels on a printed page and memory locations in the bit map memory.

All printing apparatuses must operate within the constraints of the available resources. For example, the controller, which is typically a microprocessor forming a central processing unit ("CPU"), has only a limited amount of processing power and is able to manipulate only a limited amount of data including image data within any one time period. The controller has access to only a limited amount of memory including the bit map memory. Some printers are provided with other resources such as external memory devices which are accessible through a communication line which has only a limited amount of bandwidth (or data-carrying speed).

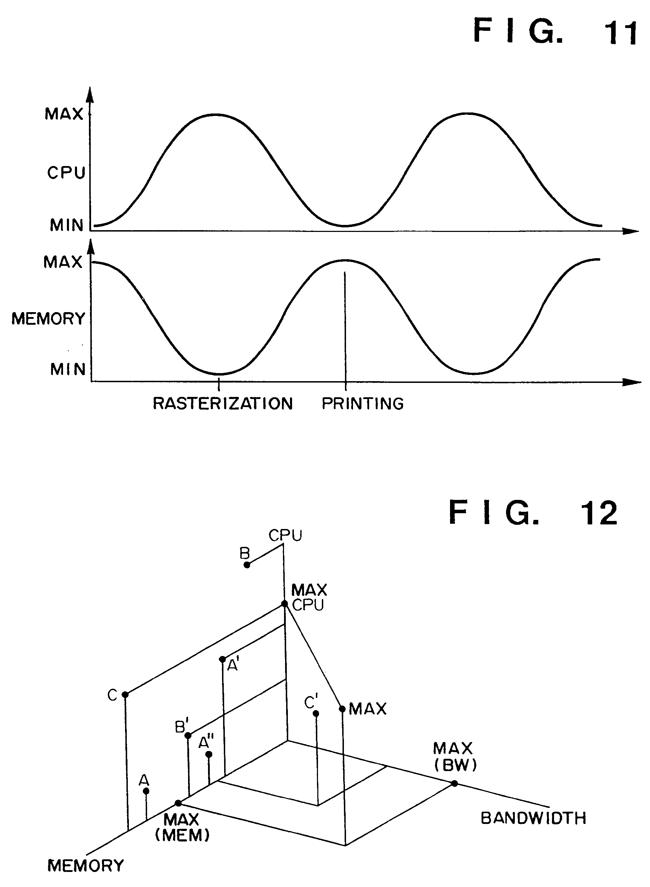

Conventional printing apparatuses use the finite amount of resources that are available to them only inefficiently. For example, Fig. 11 is an illustration of a typical CPU resource usage pattern in a printer. As shown in Fig. 11, CPU usage varies widely between peak CPU usage and relatively low CPU usage. Peak CPU usage occurs between printed pages during creation of the raster image in bit map memory while low CPU usage occurs as a page is being printed.

The reason for this inefficiency is that, to ensure that the image is printed properly, printing apparatuses such as laser beam printers which form pixels by scanning must have a full raster image of the print image developed in bit map memory before printing can commence. This is because scanning printing apparatuses print at a uniform rate while a page is being printed. That is, once page printing has begun, printing continues at a uniform rate until page printing ends. Accordingly, to assure that the print engine does not run out of data to print (a condition known as data underflow), the entire image to be printed is developed into a raster image in bit map memory before printing commences. The CPU is responsible for developing the raster image into bit map memory, and this process represents peak CPU usage. During actual printing of the image, however, the CPU needs only to monitor the bit map memory to ensure that the raster image is provided to the print engine at the same rate as the print engine prints it. This relatively simple task represents low CPU usage.

Correspondingly, and as further shown in Fig. 11, when CPU usage is at its maximum, memory usage is at its minimum. This is because bit map memory is full only at a period just prior to image printing. As described above, this corresponds to a period when CPU functions are minimal.

For the simplest print systems, such inefficiencies are tolerable. For example, to print a simple black and white image at low resolution such as 300 dots per inch (dpi) on a standard $8_{1/2}$ X 11 inch sheet of paper requires approximately 1 megabyte (Mb) of bit map memory. The price of 1 Mb of memory is low enough so that it is acceptable for large portions of the memory to be unused for long periods of time. This remains so even if the bit map memory is double buffered, that is, 2 Mb of memory are provided. Double buffering is desirable because it allows the CPU to develop a succeeding page of image data into a raster image in one buffer at the same time that the CPU is printing a current page of image data from the other buffer. Double buffering helps to provide a continuous stream of raster image data to the print engine thereby obtaining better inter-page throughput in a relatively cost effective manner.

But, as resolution increases, and as greater capabilities (for example, halftone and color) are desired, such inefficiencies can no longer be tolerated. For example, at 600 dpi resolution, four times as much memory is needed than is needed at 300 dpi to store a full raster image. The effect becomes even more pronounced when halftone or color images are considered. For example, to provide sixteen grey levels for each pixel in a halftone image requires 4 bits per pixel. Multiplying four bits per pixel by 4 Mb to store a 600 dpi raster image results in a requirement for a 16 Mb memory to store a halftone raster image. When color is considered, the memory requirements become even greater. For example, to encode four colors per pixel with 8 bits for each color means that 32 bits are required for each pixel. Multiplying 32 bits by 4 Mb for a 600 dpi raster image results in a 128 Mb memory requirement to store a full color 600 dpi raster image. The price for such large amounts of memory is not acceptable for wide commercial acceptance, and becomes even worse when double buffering is provided to reduce inter-page delay.

It has been considered to increase the apparent size of physical memory through the use of virtual memory in which off-line memory devices such as a disk drive are used to provide additional memory space and which are connected to a printer controller through a communication link. The use of virtual memory in a printing apparatus has not proved entirely satisfactory. This is because of the uncertainty involved in ensuring that there is sufficient bandwidth in the communication link so as to provide timely pixel data to the printer engine and avoid data underflow.

Further, high quality raster-based devices, such as laser beam printers and ink jet or bubble jet printers and the like, have become widely available. These devices receive image data from a host computer and generate a raster image in bit map memory for subsequent imaging and/or printing.

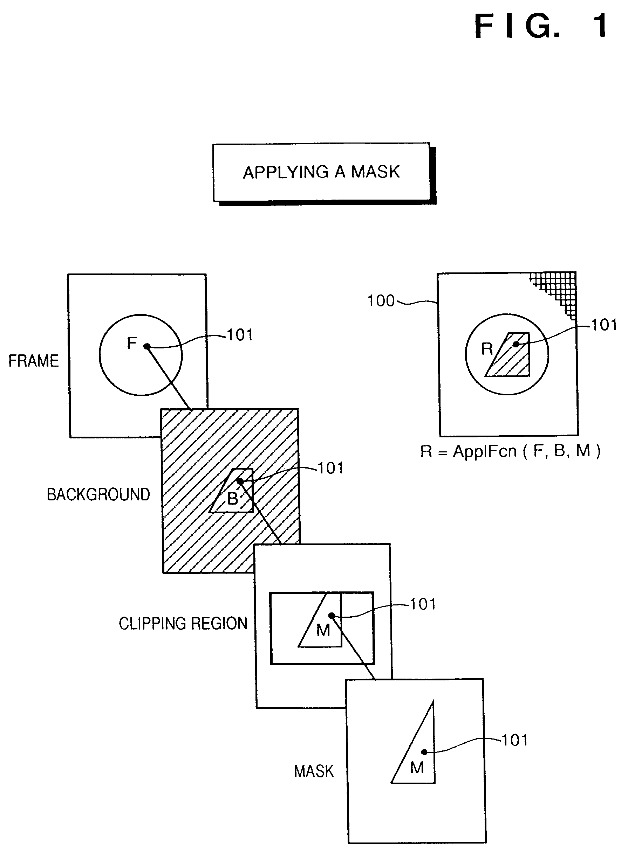

Fig. 1 shows the rasterization process by which each pixel in bit map memory is formed, and by which qualities (such as color, grey level or half toning) are given to each pixel. As shown in Fig. 1, the bit map raster 100 is divided into frames F which define areas in the bit map raster. For each pixel 101 in the frame, a mask M and a background B are defined. The mask M defines whether or not the pixel should be rendered into bit map memory and the location where the pixel should be rendered. The background B defines the qualities with which the pixel 101 should be rendered. For example the background B may comprise a color associated with the pixel or it may comprise a halftone density. If desired, a clipping region may also be defined to specify the effective areas of the mask and allow more precise control over the masks. The rasterization of pixel 101 in the bit map memory is the intersection of the frame information, the background information, clipping region information, and mask information, all as illustrated in Fig. 1.

As the versatility of raster printing devices increases, more sophisticated techniques for instructing how to form the raster image have been developed. That is, it is not ordinarily practical to transmit a full raster image to the printer. Rather a descriptive language such as page description language ("PDL") is used. A page description language is a series of commands that describes all characteristics of each element on every page of the document, such as text, graphics, scanned images. The PDL may also include information that describes document layout and sheet handling (collation, etc.). The host computer transmits page description language to the printing device, and the device interprets the page description language so as to render the raster image.

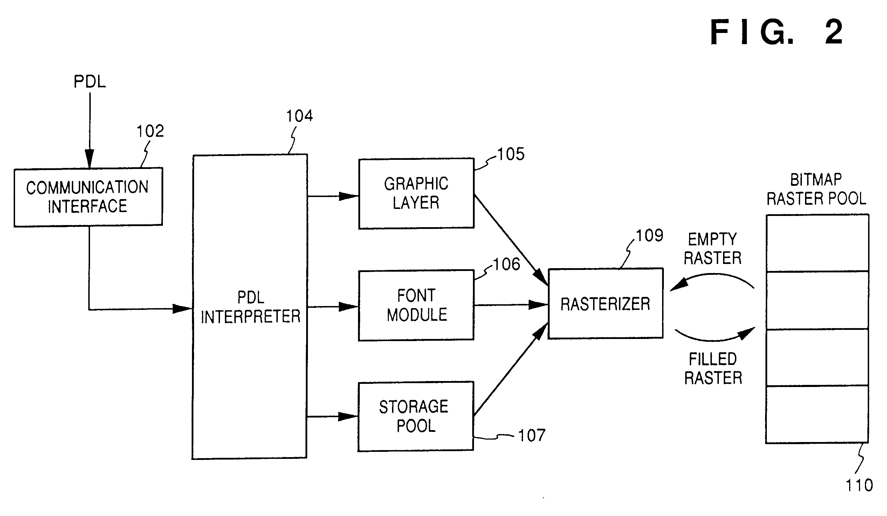

Fig. 2 is illustrative of this process. Fig. 2 depicts modules in a printing device which accept page description language at one end and create a bit map raster image at the other end. As shown in Fig. 2, a communication interface module 102 receives PDL commands and passes them to a PDL interpreter 104. The PDL interpreter directs PDL commands to a graphic layer 105, a font module 106, and a storage pool 107 as appropriate to the particular PDL command being processed by the interpreter. A rasterizer 109 accepts output from the graphic layer and the font module and the storage pool, and forms a raster image in a bit map raster memory. Specifically, the rasterizer 109 accepts an empty raster from bit map raster pool 110 and returns a filled raster to the raster pool. The filled raster is imaged by the printing device during which time a further empty raster (corresponding to a succeeding page) is being filled by rasterizer 109.

Printer commands like PDL commands are normally device-independent which means that the final document will look the same for the same PDL commands regardless of the printing device that receives the PDL commands. While this is advantageous in some respects, it has caused difficulty in that each different printer, because of its own unique characteristics, must be designed with its own unique PDL interpreter 104 which translates device-independent PDL commands into corresponding raster images.

It is known from EP-A-0470782 to provide rendering of image data by first decomposing graphics functions into a compact series of commands suitable for subsequent realtime processing to complete the rendering and carry out the printing operation. The processing is arranged to process small sections of the image data at a time, corresponding to bands of scan lines in the printed image. Means for determining the printer resources are provided. EP-A-467153 discloses means for adapting the resolution of developement to the resources.

It is an object of the present invention to use resources in a printer more efficiently so as to provide a printer having greater capability without the need of increasing the amount of physical resources available to it.

According to the present invention there is disclosed an image processing apparatus comprising:

converting means operable to convert print commands (PDL) first intermediate code data;
rendering means operable to render the first intermediate code data into a raster image; and
a print engine operable to perform a printing operation using the raster image, characterised by further comprising the intermediate code being dynamically adjustable so as to convert a print command by primitives of the intermediate code requiring different amounts of resources;
first determining means operable to determine whether or not a printing operation is possible on the basis of usage of a plurality of printer resources required by the first intermediate code data; and

controlling means for, when said determining means determines that the printing operation is impossible, generating second intermediate code data so as to adjust the intermediate code to the plurality of existing printer resources to enable the printing operation, and controlling the rendering means and the print engine such that the printing operation is performed using a raster image obtained by rendering the second intermediate code data.

An image may thereby be stored in a coded, compact representation before it is rendered into a full rasterized image. The representation is such that the resources that are needed to render a full rasterized image can be predicted with great accuracy. Predictor functions are provided to predict resource usage so as to determine, prior to printing, whether the printer has sufficient resources to conduct printing. If sufficient resources are available, then printing is performed. If the resources are not available, trade-offs between resources can be made so as to allow printing to take place.

The invention may be embodied in a raster-based printing or display device such as a laser beam printer or ink jet or bubble jet printer, but it also may be embodied in a printer driver-in a host computer and executed as part of host computer processes.

A preferred embodiment includes a graphics language processor that includes a mask generator for generating pixel mask objects in a frame. A background generator is provided for generating backgrounds against which the objects are applied. An interpreter interprets a stream of graphic language commands input to the processor and activates the mask generator and the background generator in accordance with the graphics language. A rasterizer applies the mask objects to the background onto a bit map raster memory. The mask generator may include plural different mask generators and those plural mask generators may be organized into pipelined structures so as to be activated, in accordance with the graphics language, by the interpreter. Likewise, the background generator may include plural background generators, each of which generates a different kind of background, and each of those background generators may be organized into pipelined structures so as to be activated by appropriate graphics language commands through the interpreter. A coordinator may be provided for coordinating the pipeline among the structures. The mask objects generated by the mask generator may be primitive objects which are compact representations of the pixel objects, or the mask objects may be segments of bit map images. If desired, a clipper may be provided so as to clip the output of the mask generator. Likewise, in certain embodiments, a dispatcher may be employed so as to sequentially select raster areas and to cause the mask generator and the background generator and the rasterizer to operate on the selected raster areas, respectively. For example, the dispatcher may cause banded partitions of the raster to be sequentially selected and operated on by the mask generator and the background generator and the rasterizer.

This brief summary has been provided so that the nature of the invention may be understood quickly. A fuller understanding of the invention may be obtained by the following description in conjunction with the remaining drawings in which:

Fig. 1 is an illustration showing a rasterization of pixels in a bit map raster memory;
Fig. 2 is a depiction of a PDL printer process;
Fig. 3 is a printer according to the invention;
Fig. 4 depicts a graphics language processor according to the invention;
Fig. 5 is a diagram for illustrating the interface between the page description language and a graphics language according to the invention;
Fig. 6 is a diagram illustrating how a mask is applied against a background onto a raster;
Fig. 7 is a detailed view showing mask generators and background generators according to the graphics language processor of the invention; and
FiGL. 8, 9 and 10 are view showinGL different forms of the graphics language processor, in which Fig. 8 is a sequential processor, Fig. 9 is a banded processor, and Fig. 10 is a pipelined processor.
Fig. 11 is a diagram illustrating CPU and memory usage during a print cycle;
Fig. 12 is a graph used to illustrate the resource envelope available to a printer;
Fig. 13 is a block diagram of a controller for the printer of Fig. 3;
Fig. 14 is a diagram illustrating memory usage in the printer of Fig. 3;
FiG. 15 is a flow chart illustrating operation of the Fig. 3 printer;
Fig. 16 depicts coded image representations according to the invention; and
FiG .17 to 21 depict object images shown in Fig. 16.

DETAILED DESCRIPTION OF THE PREFERRED EMBODIMENT

[First Embodiment]

In a graphics language stream, graphic descriptions for frames in a page are separated from document layout information which describes how the frames are placed on the page, and in which the graphic descriptions and the document layout information are output on separate, pipelined, interfaces. A graphics language processor is provided to intercept the graphics language stream. The processor separates the graphics language stream into mask information and background information against which the masks are applied, operates independently on the mask and background information to create frame rasters, and uses the document layout information to map the frame rasters onto the page.

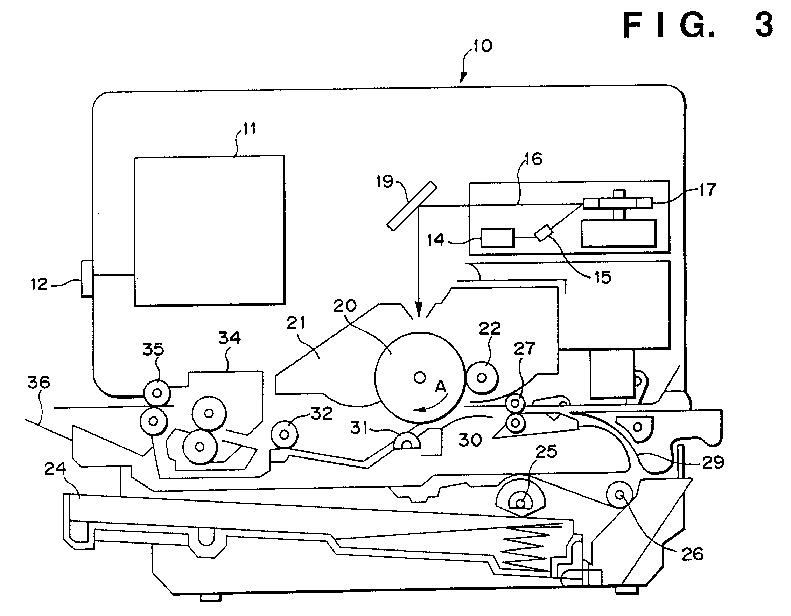

Fig. 3 is a laser beam printing apparatus according to the invention.

As shown in Fig. 3, laser beam printer 10 includes a controller 11 which controls the various mechanical and electrical functions within the printer. In particular, controller 11 accepts image data that is derived by an unshown host computer through communication port 12 and processes the image data so as to derive a laser modulation signal that is applied to laser driver 14. The image data from communication port 12 is preferably in a very compact form such as a page description language ("PDL") which merely defines objects and the objects' location on the page rather than defining a full raster image of the print image, but any form for the image data can used. In accordance with the image signal provided by controller 11, laser driver 14 drives laser 15 so as to cause it to emit a laser beam 16. A rotatable polygonal mirror 17 scanningly deflects laser beam 16 via mirror 19 onto the surface of photosensitive drum 20. Photosensitive drum 20 is rotated in the direction of arrow A past charger 21. The scanningly deflected laser beam 16 forms a latent image on the surface of the charged photosensitive drum, and the latent image is developed into a toner image at developer 22.

In coordination with scanning the surface of drum 20, controller 11 causes the topmost sheet of paper from stack 24 to be fed by pickup roller 25 and conveyed by rollers 26 and 27 through image passageway 29 to photosensitive drum 20. The tonerdeveloped latent image on drum 20 is transferred to this sheet by transfer charger 30 and conveyed by rollers 31 and 32 to fixing device 34. In fixing device 34, a combination of heat and pressure fixes the toner image permanently on the sheet and the sheet is ejected by rollers 35 onto output tray 36.

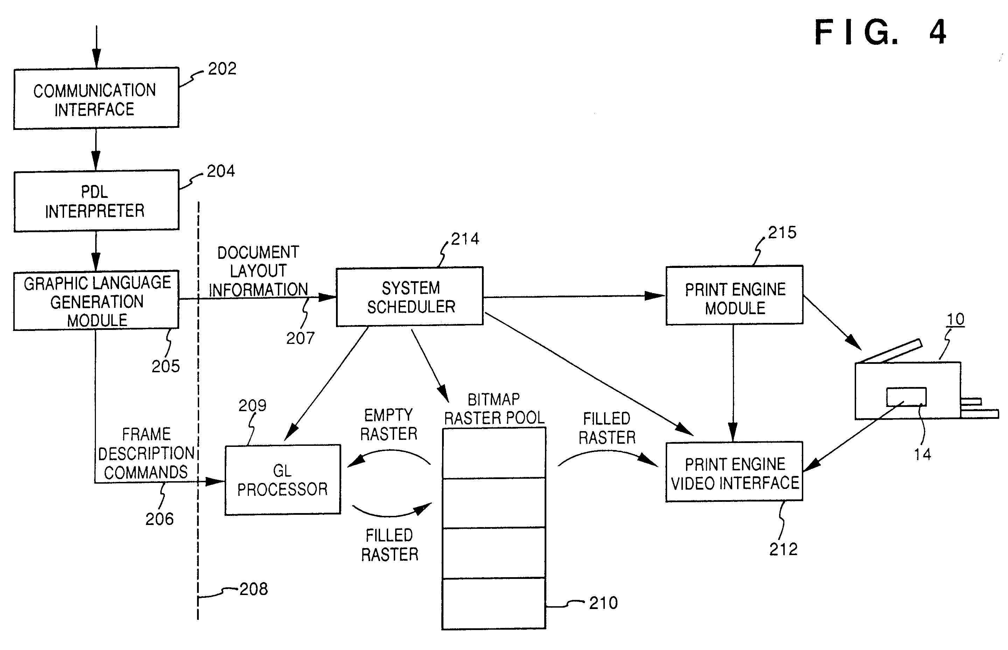

Fig. 4 is a view showing controller 11. In Fig. 4, communication interface 202 and PDL interpreter 204 are substantially similar to the communication interface and PDL interpreter shown in Fig. 2, and descriptions thereof have been omitted.

As shown in Fig. 4, page description language is processed by PDL interpreter 204 and is passed from PDL interpreter 204 to graphic language generation module 205. Graphic language generation module 205 translates PDL into a graphics language document according to the invention. In particular, in accordance with the PDL language, graphic language generation module 205 generates the graphics language document into two parts. First, the graphics language generation module 205 generates frame description commands in graphics language as shown at 206. The frame description commands describe raster frame sequence of primitive raster operations. Thus, the frame description commands define objects and rules on how to apply the objects onto the raster frames. For example, the frame description commands might instruct the graphic language processor to place a box-shaped set of pixels over a color image background and to position the resulting pixels at a specific location in bit map raster memory. Or the frame commands might instruct the graphics language processor to form a corporate letterhead as a first frame, a text image comprising a letter as a second frame, and an image of a signature as a third frame. Frame description commands are described more fully below.

As further shown in Fig. 4, the second output of graphic language generation module 205 is document layout information 207. Document layout information describes how to apply the frames defined by frame description commands 206 onto a bit map raster that corresponds to a document page. Specifically, the document layout information includes information as to how the frames are mapped onto the raster memory. For example, document layout commands might command the graphic language processor to map several frames onto different and possibly overlapping positions in the bit map raster for a page. In the case of printable documents, the document layout information may include specialized printing instructions such as duplex printing, and it may also include paper sheet handling and finishing instructions, such as stapling and collation instructions.

The graphic language commands 206 and the document layout information 207 are output on the pipelined outputs across interface 208. Interface 208 may be a physical interface between di-screte devices such as the interface between a host CPU and a print engine. For example, it is possible to implement communication interface 202, PDL interpreter 204, and graphic language generation module 205 as a printer driver in a host CPU. In that case, page description language commands that are generated in the host computer are also converted into graphic language commands 206 and document layout information 207 and are output across a pipelined interface directly to a printer engine. In the embodiment described here, however, interface 208 is an interface between two modules in controller 11. The modules may be implemented either in software or in hardware.

Graphic language commands 206 are input to graphic language processor 209 which renders the graphic language commands into an empty raster that is provided from bit map raster pool 210. The filled raster is provided to a print engine video interface 212 which provides the input to laser driver 14 of the printer.

Document layout information 207 is provided to system scheduler 214 which coordinates operation of the various modules. In particular, system scheduler 214 provides an empty raster from bit map raster pool 210 to the graphic language processor 209 and instructs the graphics language processor to begin rendering pixel images into the raster. When the graphic language processor 209 completes rendering the raster image, system scheduler 214 instructs print engine video interface 212 to begin providing data to laser driver 14 in accordance with the rendered raster image. In synchronism with modulating the laser beam, system scheduler 214 instructs print engine module 215 to begin operation of the various mechanical aspects of printer 10, such as sheet feeding, drum rotation and roller fixing. System scheduler 214 also instructs duplex printing, paper output, stapling, collation and other document finishing information in accordance with the document layout information 207.

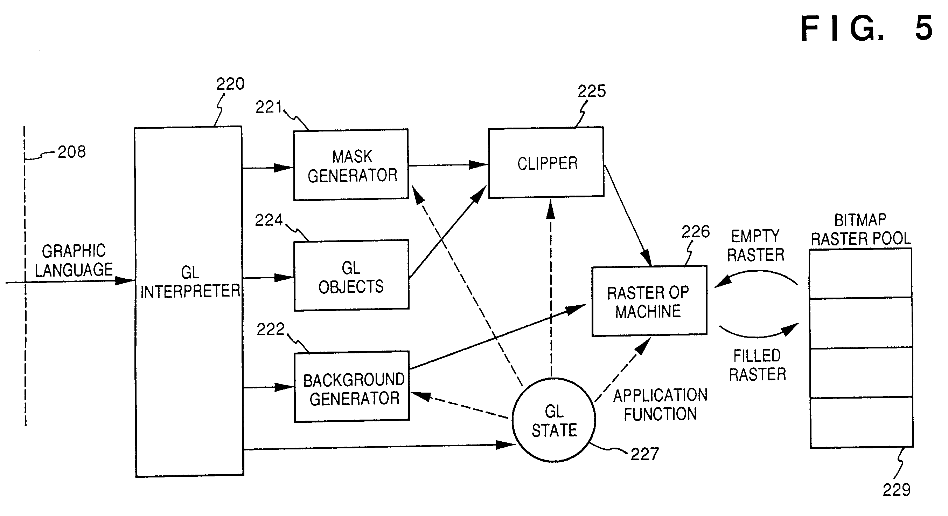

Fig. 5 is a detailed view of the graphic language processor 209. As seen there, the processor 209 includes a graphic language interpreter 220 which parses a stream of graphic language commands and interprets the graphics language commands. In particular, the graphic language interpreter stores graphic language objects 224 as those objects are encountered in the stream of graphic language commands. The interpreter also passes mask application commands to mask generator 221 and passes background generation commands to background generator 222 as those commands are encountered in the stream of graphics language commands. Mask generator 221 generates mask information such as mask M shown in Fig. l; likewise, background generator 222 generates background information such as background B shown in Fig. 1. Both mask generator 221 and background generator 222 draw upon graphic language objects stored in GL object storage 224.

The masks generated by mask generator 221 are passed to clipper 225 which clips the masks, if desired, in accordance with the GL commands. Clipper 225 also draws upon graphic language objects stored in GL object storage 224.

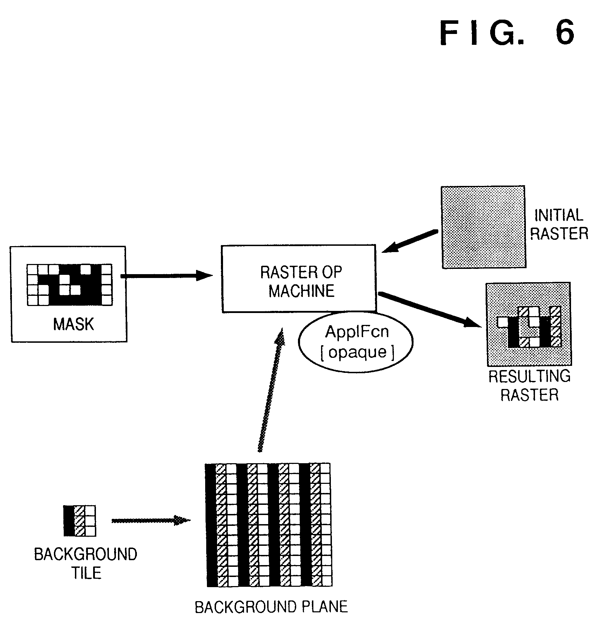

The output of clipper 225 and the output of background generator 222 is provided to rasterOP machine 226. RasterOP machine 226 functions to apply the mask generated by mask generator 221, as clipped by clipper 225, onto the background generated by background generator 222. The rasterOP machine applies the mask in accordance with an application function defined by GL state memory 227. For example, as shown in Fig. 6, an opaque application function has been specified. Accordingly, when the rasterOP machine applies the mask generated by generator 221 and clipped by clipper 225 onto the background plane generated by generator 222, any information in the initial raster is obliterated when forming the resulting raster. Other application functions are possible, for example, transparent application functions or additive application functions.

The raster on which the rasteroP machine 226 operates is provided from a bit map raster pool 229 as coordinated by system scheduler 214. When all applications have been finished, as set forth in the document layout information 207, the rasterOP machine provides a filled raster back to the bit map raster pool and the filled raster is printed by printer 10.

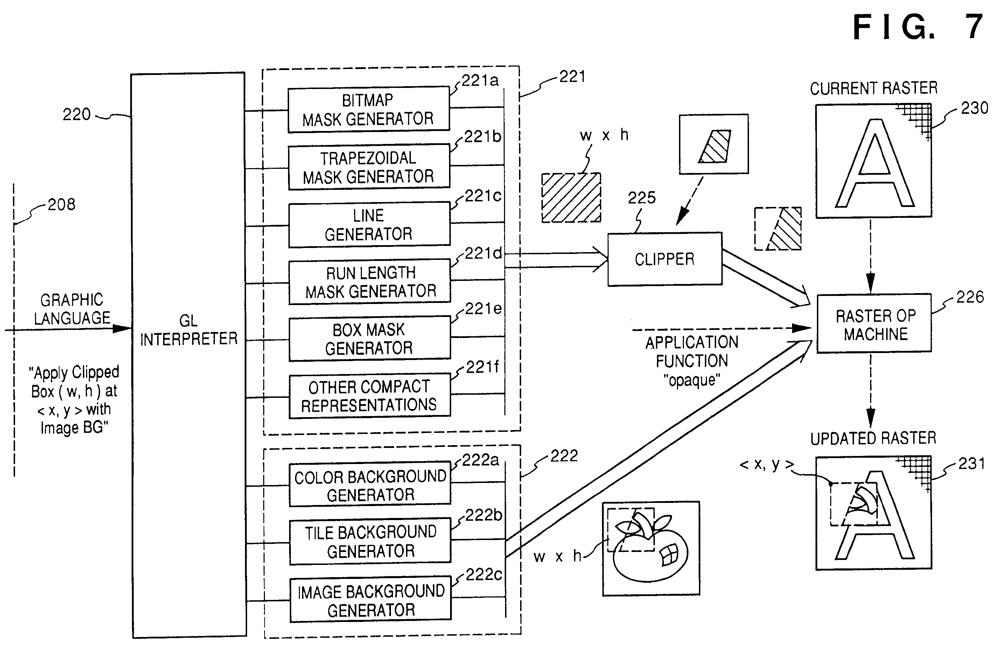

Fig. 7 is detailed conceptual view showing the construction of mask generator 221 and background generator 222, as well as showing the application process of rasterOP machine 226. In Fig. 7, some of the elements shown in Fig. 5 have not been depicted so as to simplify the following presentation.

As shown in Fig. 7, mask generator 221 includes several mask generators that have been designed specifically to produce specialized pixel primitive objects. In particular, mask generator 221 includes a bit map mask generator 221a, a trapezoidal mask generator 221b, a line generator 221c, a run length mask generator 221d, a box mask generator 221e, and a generator 221f that generates other compact representations. In more detail, bit map mask generator 221a produces a bit map mask in response to GL commands from GL interpreter 220. Bit map masks are bit-for-bit pixel representations of a mask.

Trapezoidal mask generator 221b generates a trapezoidal-shaped mask in response to GL commands from GL interpreter 220. Trapezoidal masks define trapezoidal objects in raster memory.

Line generator 221c generates line drawinGL of specified thickness in response to GL commands from GL interpreter 220.

Run length mask generator 221d encodes run length masks based on the run length of pixels within the mask.

Box mask generator 221e generates a boxshaped mask of specified width and height in response to commands from GL interpreter 220.

Other compact representations are possible, and the above set should not be viewed as limiting, but rather only as representative of the types of masks generated by mask generator 221.

Background generator 222 includes color background generator 222a, tile background generator 222b, and image background generator 222c.

In more detail, color background generator 222a responds to GL commands from GL interpreter 220 and generates a solid color background of specified color.

Tile background generator 222b generates and replicates a tile specified by GL interpreter 220. The tile pattern is replicated across the entire background in the area specified by the GL interpreter.

Image backaround generator 222c provides an image background in a pixel-for-pixel format as specified by GL interpreter 220.

Other background generators are possible, and the above list should be viewed not in a limiting sense, but rather only as representative of the type of background generators that may be included in background generator 222.

Fig. 7 also illustrates how a current raster 230 is updated by rasterOP machine 226 in response to graphic language commands so as to produce updated raster 231. As shown in Fig. 7, GL interpreter 220 has received the graphic language command "apply clipped box (W,H) at ⟨x,y⟩ with image background". (A list of graphic language commands is given in Appendix A.) In response to the first portion of the graphic language command, namely "apply clipped box (W,H)", the GL interpreter 220 activates box mask generator 221d. Box mask generator 22le generates a box-shaped mask of width W and height H as depicted illustratively at the output of mask generator 221. Thereupon, clipper 225 draws upon the graphic language objects stored in memory 224 to provide a clipped shape as depicted illustratively adjacent clipper 225. The resulting clipped box is provided to rasterOP machine 226.

In response to the later portion of the graphic language command, namely "with image background", GL interpreter 220 activates image background generator 222c. The image background generator 222c draws upon the graphic language objects stored in memory 224 and provides the image background, which may be a color image background, to rasterOP machine 226.

In response to the information provided by clipper 225 and background generator 222, rasterOP machine 226 applies the clipped mask to the background in accordance with the application function specified by state memory 227. Here, the application function is specified by "opaque", in accordance with which the rasterOP machine 226 applies the masked and clipped area of the background at position ⟨x,y⟩ of the current raster so as to obtain the updated raster shown at 231. The foregoing steps are performed for each command in the stream of graphic language commands for each frame, after which the document layout information 207 is utilized to determine how the frame is applied to the overall bit map raster.

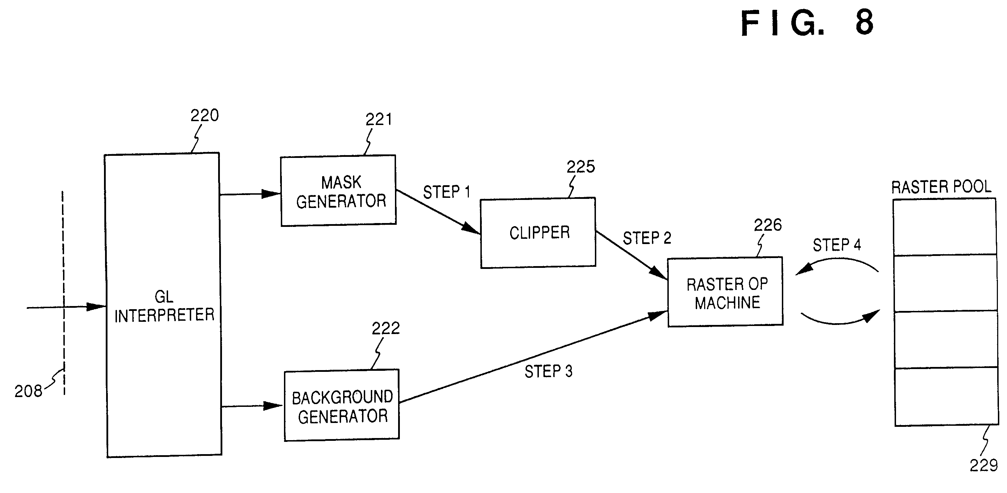

Fig. 7 has been explained as if the process were a sequential process, as depicted in Fig. 8. That is, in step 1, mask generator 221 generates a mask that is provided to clipper 225. In step 2, clipper 225 clips the mask appropriate and provides. it to rasterOP machine 226. In step 3, background generator 222 provides a background to rasterOP machine 226, and in step 4, rasterOP machine 226 applies the mask to the background and writes it into the raster image in the bit map raster memory. While this is one possible implementation of the graphic language processor, other implementations are possible.

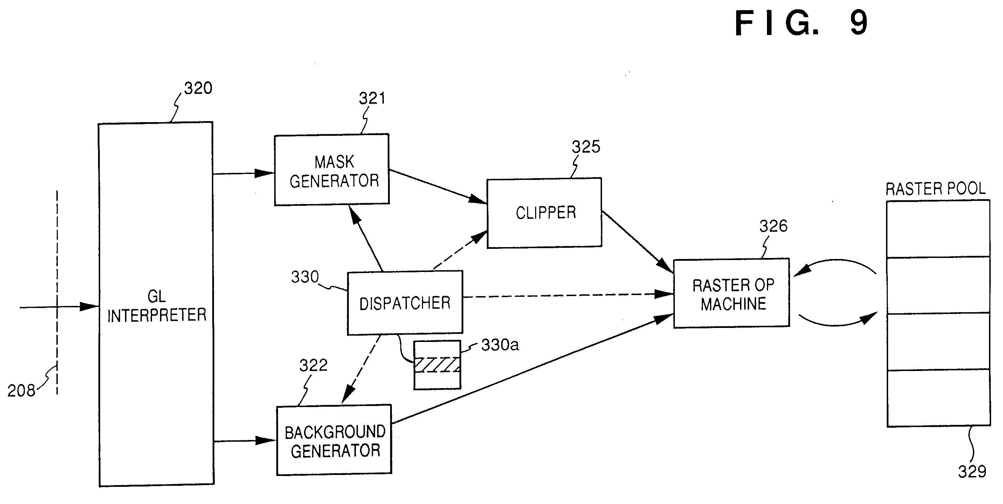

Thus, as shown in Fig. 9, dispatcher 330 is provided to coordinate the activities of the mask generator 321, clipper 325, background generator 322 and rasteroP machine 326. Specifically, dispatcher 330 instructs each of these modules to operate on a specific area of the raster image, such as area 330a. Typically, such an area is a band in a partitioned and banded area of bit map memory, but this is not necessarily the case, and the area may be any arbitrary area in the image. Dispatcher 330 serially sequences through the entire area, for example, from band to band, until the entire page in bit map memory has been rendered. Thus, dispatcher 330 causes mask generator 321, background generator 322, clipper 325 and rasterOP machine 326 to operate on sequential areas of bit map memory but to operate on only a single area at one time. Graphic language objects that are specified for other areas are temporarily ignored and are processed only at a later time when dispatcher 330 indicates that that area should now be processed. Because of this, memory overhead may be necessary for the Fig. 9 structure to store temporarily the graphic language commands. The overhead may be minimized by insuring that the areas sequentially selected by dispatcher 330 are large enough so that the amount of graphic language commands that need to be stored is minimized.

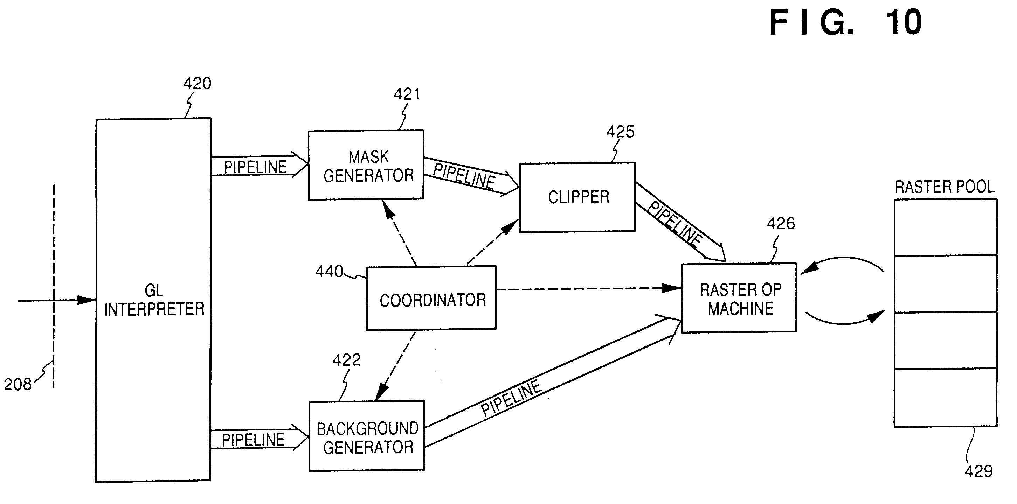

Fig. 10 shows another implementation of the graphic language processor in which a coordinator 440 is provided to coordinate a pipeline between mask generator 421, background generator 422, clipper 425 and rasterOP machine 426. Specifically, in the implementation shown in Fig. 10, each of the modules is-a pipelined module designed to operate on whatever information is currently first available in its pipeline. Each module operates on its own pipelined instruction in parallel and at the same time as described generally in "Computer Architecture: A Quantitative Approach", D.A. Patterson and J.L. Hennessy, Chapter 6, Morgan Kaufman Publishing Company (1990). As such, coordinator 440 is provided to ensure that the modules start in-synchronism and remain in synchronism throughout operation. Thus, for example, whereas background generator 422 will provide a background directly to rasterOP machine 426, mask generator 421 is not able to provide a corresponding mask object directly to the rasterOP machine because clipper 425 is interposed between mask generator 421 and rasterOP machine 426. Thus, coordinator 440 ensures that the clipped mask which is output by clipper 42s is associated with the proper background output from background-generator 422 so that the rasterOP machine 426 operates on associated pieces of information.

The graphics language processor described hereinabove may be combined with a printer of another architecture such as that described hereinafter. In combination with the techniques described in that application, it is possible to translate the graphic language commands described herein into a further DART representation. The DART representation is susceptible of accurate modeling of printer resources whereby it is possible to determine before a printing operation commences whether there are sufficient printer resources to complete the printing operation. If there are sufficient resources available, then printer commences; on the other hand, if there are insufficient printer resources then the printer operation may be changed so as to ensure that the printing operation can be completed.

[Second Embodiment]

Next, another embodiment is described in which the above-mentioned embodiment is preferably applied.

The present embodiment relates to a method and apparatus for printing an image in which a printing operation can be changed before the printing operation commences in accordance with predictions as to how much of the printer's resources will be used in printing the image, as mentioned in the last of before embodiment. The image is stored in a coded representation before being converted into a full raster image, the coded representation being susceptible to accurate modeling of resources used in converting to a full raster image. Accordingly, the usage of printer resources in converting the coded representation of the image into a full raster image can be predicted accurately and it can be determined before printing whether the printer has sufficient resources to print the image. In the event that the prediction indicates that there are insufficient resources, resources can be re-allocated so as to permit the image to be printed.

Because the coded representation allows dynamic and adaptive use of printer resources, the representation is referred hereafter as the dynamic adaptive resource (or resolution) technology, or "DART", representation.

Consider, for example, the resources depicted graphically in Fig. 12, namely, CPU power, memory, and bandwidth. CPU power refers to the speed and ability with which a CPU in a printer controller can manipulate data and process it from one form to another. Memory refers to the amount-of memory available to the printer. Bandwidth refers to the bandwidth or data-carrying speed of a communication link to an external memory device. Included in bandwidth are any known delays of the external memory device, for example, access time, disk head delays, and disk rotation speed.

Any one printer will have an envelope of resources available to it defined by a point representing the maximum CPU power, the maximum memory, and the maximum bandwidth. If predictor functions predict that rendering the DART representation into a full raster image will exceed one of these resources, then resource trade-off can be conducted. For example, if it is determined that there is insufficient memory to store the image, but that CPU power is underutilized (represented by point A in Fig. 12), then it is possible to substitute a different DART representation, one which uses less memory but which requires more CPU power to render the representation into a full raster image. Thus, memory has been exchanged for CPU power. This trade-of f shifts point A to point A' which is within the resource envelope available to the printer and allows printing to commence.

It is also possible to degrade the image such as by lowering the print resolution or by limiting the number of grey levels for halftone images or colors for color images. Degrading the image eases memory requirements without putting a further burden on the CPU. This trade-off results in a shift of point A to point A'' which is within the printer resource envelope and which allows printing to commence.

Conversely, the predictor functions may predict that the CPU has insufficient CPU power to render a full raster image from the DART representation in sufficient time to provide the raster image to the print engine, that is, there would be data underflow. If there is sufficient memory available (represented by-point B in Fig. 12), then CPU power may be exchanged for memory space, e.g. by pre-rasterizing the portion of the image that requires too much CPU power. This trade-off shifts point B to point B' which is within the resource envelope of the printing apparatus so that printing may commence.

Likewise, it is also possible to trade-off CPU power and/or memory with bandwidth. For example, in a case like point C in which it is predicted that maximum CPU power is already being expended to render a full raster image from the DART representation, but that memory resources are still exceeded, then it is possible to trade-off memory for bandwidth, e.g. by causing a portion of the image to be stored off-line and retrieved when needed.through a communication link. This sh-ifts point C to point C' which is within the resource envelope of the printing apparatus. The predictor functions ensure that the bandwidth is sufficient so that raster image data is timely provided to the print engine and the print engine does not suffer from data underflow.

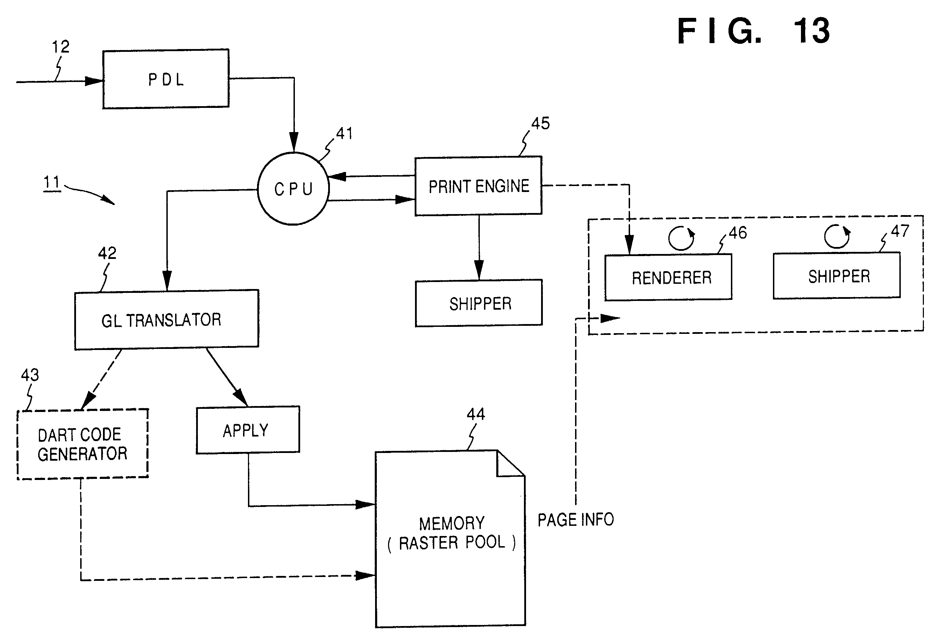

Fig. 13 is a block diagram of controller 11. Each and every physical connection in controller 11 is not depicted in Fig. 13, but rather, Fig. 13 is intended to show the flow of processes within the controller.

As shown in Fig. 13, controller 11 includes CPU 41 which accepts image data such as page description language from communication interface 12. CPU 41 converts page description language image information into a graphics language (or graphic stream language) using GL translator 42. Graphics language is a language which encodes image data at a level intermediate the highly compact PDL level and the full raster image data level. As described more fully below, GL language includes primitives, such as image objects, and rules as to how those primitives are applied to bit map memory to form a full raster image.

From the GL representation at 42, CPU 41 generates a DART representation via generator 43. The DART representation created by generator 43 is a compact coded representation for a raster image in which the resources used to convert from the DART representation to a full raster image can be predicted with great accuracy. The DART representation generated by generator 43 uses many of the same primitives as the GL representation. However, unlike GL which acts on a raster image as a whole, the DART representation generated by generator 43 acts only on banded partitions of the image. Accordingly, and because more complex primitives found in the GL representation are not used, accurate predictors of resource usage can be provided for the DART representation whereas such predictors cannot be provided for GL.

The DART representation generated by generator 43 for each band is stored in memory 44. As printer engine 45 requires data which corresponds to scans of laser beam 16 on photosensitive drum 20, the representation stored in memory 44 is rendered into a full raster image of the band by renderer 46 and shipped by shipper 47 to the printer engine.

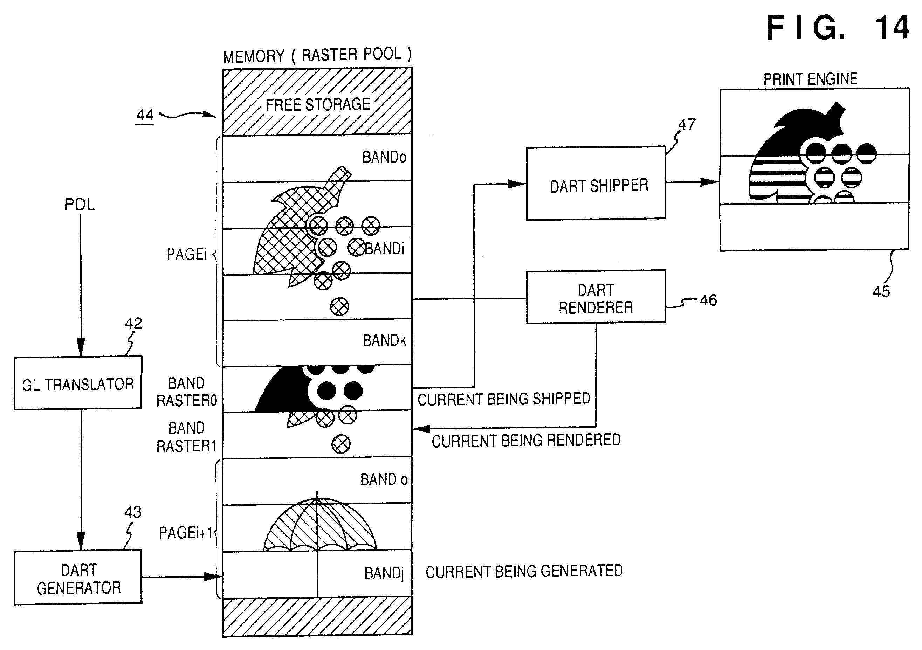

Fig. 14 is a representational view of how an image is partitioned (or banded) in accordance with the DART representation generated by generator 43. As shown in Fig. 14, page images are partitioned into bands that correspond to the scan direction of the print engine, here, the horizontal direction. Typically, about 27 bands are sufficient to process an $8_{1/2}$ X 11 inch image efficiently, although this many bands have not been shown in Fig. 14 for the sake of simplicity.

Memory 44 is the same memory area that in conventional printers corresponds to the bit map memory. The memory is used as a queue: as DART images are generated the memory is used up and as they are rendered and shipped out to the printer engine the memory is freed. Whenever a new page is to be generated, memory is allocated at the start of free memory. Wrap-around from the end of physical memory to the beginning thereof is provided for. Once all DART objects and applications have been generated for the page, and band raster storage appended to the page, subsequent pages are started at the end of the current page's memory. Once that page has been completely shipped, its band rasters, objects, and page information structure are de-allocated and made available for re-use.

Each of the bands shown in Fig. 14 is processed serially by generator 43. Thus, for example, generator 43 first processes $band_0$ for page i, and stores the DART representation so obtained at the top of memory 44: Generator 43 then processes $band_1$ of page i and stores the DART representation so obtained in the next sequential area in memory 44. Processing continues until the last band of page i, corresponding to $band_k$, at which point a DART representation for the entire page is stored in memory 44. At this point, a full rasterized image does not yet exist for page i, but rather only the banded DART representation.

As each band is processed by generator 43, CPU 41 uses predictor functions to ensure that the resources available in printer 10 will not be exceeded when the DART representation stored in memory 44 is rendered into a full raster image. Such predictions are possible because of the structure of the primitives in the DART representation and because of the certainty of the code that renders the full raster image from the DART representation. Assuming that each of the bands can be rendered without exceeding the resources of the printer, CPU 41 appends two blank band rasters (i.e. band rastero and band raster1) to the end of page i in memory 44. Each of the blank band rasters is the size of a full-bit map image for a single band at the desired print resolution.

Generator 43 then proceeds to generate a banded DART representation for the next page, namely page i + 1.

Meanwhile, renderer 46 begins to render the banded DART representations of the page i image into a full raster image on the blank bands. First, renderer 46 renders $band_0$ into band $raster_0$. Then, renderer 46 renders the DART representation in $band_1$ into a full raster image at band raster1. Meanwhile, while $band_1$ is being rendered, shipper 47 ships the full bit map raster image in band $raster_0$ to print engine 45 so as to output that band. By the time that band $raster_0$ has been shipped to engine 45, renderer 46 has rendered a full raster image for printing $band_1$ in band $raster_1$. The availability of sufficient resources to provide the full raster image in time to avoid print engine data underflow has been guaranteed before printing by the predictor functions.

Shipper 47 then ships the full raster image available in band $raster_1$. Meanwhile, renderer 46 renders a full bit map raster image from the raster representation stored in $band_2$. This process continues until the entire page i has been rendered by renderer 46 and shipped to print engine 45 by shipper 47.

During the period when the DART representation of page i is being rendered into a full raster image and shipped for printing, any free CPU time is being utilized to convert the PDL for the next page, namely, page i + 1, into a DART representation in the same manner as described above for page i.

In the above process, if CPU 41 determines, through the use of the predictor functions, that rendering a full raster image from the DART representation will exceed the resources available, then resource trade-off or re-allocation is performed. For example, if it is determined that the DART representation is larger than a full raster image of the print information, indicating that the DART representation is less efficient than a full raster image, then if CPU power is still available, a different and more compact DART representation may be generated by generator 43. Conversely, if it is determined that CPU 41 will not have sufficient power to render a full raster image from the DART representation in the time required to process a band of information, which would result in print engine data underflow, then it is possible to pre-rasterize the offending band (or to prerasterize all or some of the page containing the offending band) so that already-rasterized data can be supplied to shipper 47 at the appropriate time.

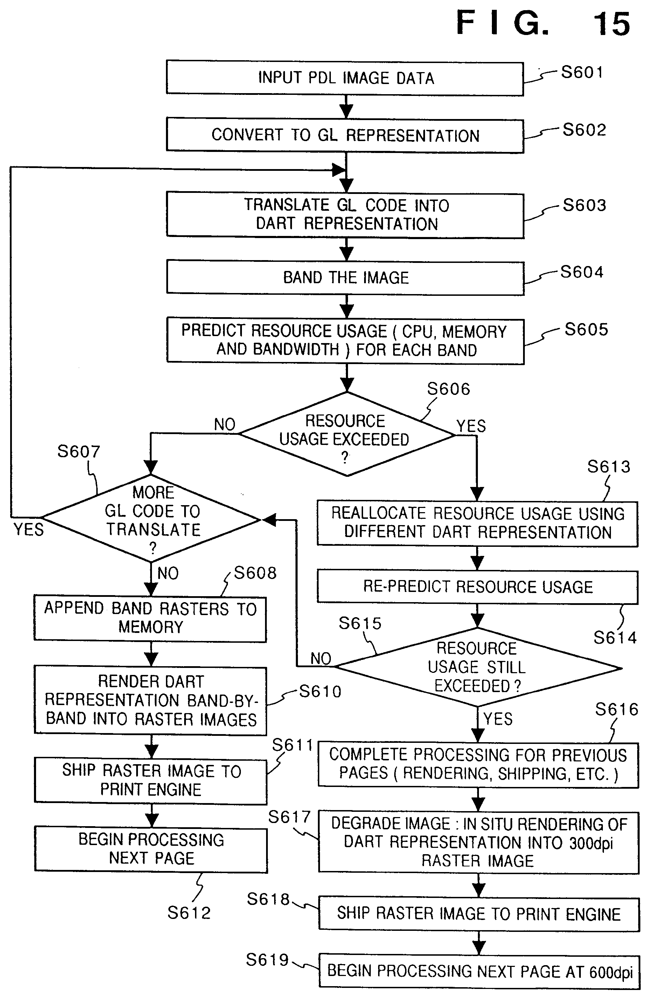

The overall process is depicted in Fig. 15. The process steps in Fig. 15 are stored in an unshown memory in controller 11 and are executed by CPU 41.

At step S601, controller 11 inputs image data from communication port 12. The image data is typically generated by an unshown host computer which sends the image data to controller 11 in a compact code such as a page description language.

At step S602, translator 42 translates the PDL image data into GL image data. At step S603, generator 42 generates a DART representation from the GL data and stores it in memory 44. As the DART representation is generated, it is banded in step S604, and in step S605 CPU 41 maintains a running tally of resource usage that will be required in rendering the DART representation into a full raster image. Specifically, for each of the different DART representations, predictors are provided that predict (a) CPU power required to render the DART representation, and (b) memory required to store the DART representation. If printer 10 were equipped with external memory linked to CPU 41 via a bandwidth-limited communication line, then a third predictor would be provided as to the bandwidth requirements for each DART representation.

The resources described here, namely CPU power, memory and bandwidth, are representative of the types of resources that printer 10 may be provided with. For each additional resource, corresponding predictor functions are likewise provided and used by CPU 41 to tally resource usage.

In step S606, CPU 41 determines, based on the tally from the predictor functions, whether resource usage will be exceeded in rendering the DART representation for the current band in a full raster image in the band rasters. Step S606 may be executed periodically during DART generation, e.g. after each DART representation is generated, or it may be executed after the DART representation for the full band is generated. In the case of determining whether memory usage is exceeded by the DART representation, it is preferred to execute step S606 periodically, for example, every time a new DART object is created.

If in step S606 CPU 41 determines that resource requirements to render the current band can be met, then flow advances to step S607 where CPU 41 determines whether there is additional GL code for the current page. If there is more GL code for the page, then flow returns to step S604 until the remaining image data has been processed.

When DART representations for all bands in the page have been generated, flow advances from step S607 to step S608 where a pair of blank band rasters are appended to the DART representation stored in memory 44. If flow has advanced to this step, then it is known that the resources available in the printer are adequate to render the DART representation band-by-band into a full raster image without the danger of exceeding printer resources, e.g. there is enough CPU power to avoid data underflow to the print engine.

In step S610, the DART representations are rendered band-by-band into alternating ones of the pair of band rasters, as described above in connection with Fig. 14. Then in step S611, shipper 47 ships the raster image to print engine 45. Steps S610 and S611 are executed concurrently and sequentially so that, as described in connection with Fig. 14, as shipper 47 finishes shipping one band of raster image from one band raster, renderer 46 has completed rendering the next band of DART representation into the other band raster.

It is also possible to provide more than two blank band rasters, in which case renderer 46 completes rendering of a fixed number of bands ahead of shipper 47.

After the current page has been printed, or as CPU time permits during rendering and shipping in steps S610 and S611, CPU 41 begins processing the next page (step S612) in accordance with the overall flow shown in Fig. 15.

If in step S606 CPU 41 determines that there are insufficient resources available in the printer, it is known that the resources needed to render or store the current DART representation exceed the resource envelope of the printer. Flow then advances to step S613 where CPU 41 performs resource trade-off or re-allocation in an attempt to fit the DART representation into the printer resource envelope. Initially, a different DART representation is selected for the offending band. For example, if the memory resource has been exceeded, then a memory-intensive DART representation may be replaced by a different representation which uses comparatively less memory. Likewise, if the CPU resource has been exceeded, then a CPU-intensive DART representation may be replaced by a different representation which uses comparatively less CPU. For example, the offending band may be pre-rasterized and stored in memory 44 so that it is ready for printing by the print engine without any further CPU processing.

In step S614, resource usage with the different DART representations is re-predicted. If resource usage now falls within the resource envelope then flow proceeds to step S607 and continues as described above. If resource usage is still exceeded, then further attempts may be made to bring resource usage within the printer envelope (steps S613 and S614).

Alternatively, or in the case where it is not possible for the DART representation to be brought within the resource envelope, then the image is degraded prior to printing. Degrading automatically reduces resource requirements. In the example given here, the image is degraded by reducing the resolution (or pixel density) from 600 dpi to 300 dpi. Image degradation may take other forms: for a halftone image, degradation may also include reducing the number of grey levels; for a color image, degradation may also include reducing the number of colors.

In step S616, in preparation for resolution degradation, processing is completed for all previous pages in memory 44, that is, DART representations for prior pages are rendered and shipped as shown at steps S610 and S611.

In step S617, image resolution is degraded by rendering the DART representations that have already been generated by generator 43. The DART representations are rendered in situ in memory 44 but at the degraded resolution. Then, GL that has not already been processed is converted to a degraded raster image in memory 44. The conversion is either direct into the degraded raster image or indirectly by first generating a DART representation and then rendering.

In step S618, shipper 47 ships the degraded raster image to the print engine. Preferably, when degradation is necessary, it should be complemented with some form of image enhancement so as to minimize the effects of degradation. For example, in the case of resolution degradation, smoothing circuitry such as that described in U.S. Patent No. 4,878,068 may be employed at the time the degraded image is shipped so as to soften the appearance of the printed degraded image.

In step S619, processing for the next page begins but without degradation.

Steps S613 through S619 provide repetitive attempts to reallocate resource usage so that sufficient resources are available for the DART representation. In a simplest form of resource trade-off, however, and in the embodiment presently preferred, resource trade-off takes the form of immediate image degradation when it is determined that resources have been exceeded, whereby the color, grey scale or pixel density (or resolution) is degraded. In the case of a simple black and white image which is being rendered into a 600 dpi raster image, for example, resolution can be degraded to 300 dpi and a full raster image can be stored in memory 44. In this instance, the DART representation is converted in situ into a degraded-but-full raster image of the image data, whereupon the full raster image is shipped via shipper 47 to print engine 45. If desired, image smoothing techniques can be applied, such as those described in U.S. Patent No. 4,878,068, so as to improve the appearance of the lower resolution image.

The various DART representations of the image that are currently preferred, and the predictor functions associated with these representation, are given as follows.

The primitives used for the representation are objects and backgrounds. The DART representation comprises a series of applications of various ones of these objects to various ones of the backgrounds.

A background consists of either a bit map tile or an image. Bit map tiles are derived from the GL image representation from translator 42. Color may be mapped onto a bit map tile by mapping colors into color planes of corresponding tiles. An image is an image representation and is optimized for fast rendering and prediction.

The object primitives that are utilized in the raster representation are preferred because their renderinGL into full raster images can be predicted with certainty and with accuracy. The preferred set of object primitives include bit maps, run length sequences, trapezoid sequences, boxes and fast boundary encoded bit maps. Each of these objects is defined with greater specificity below.

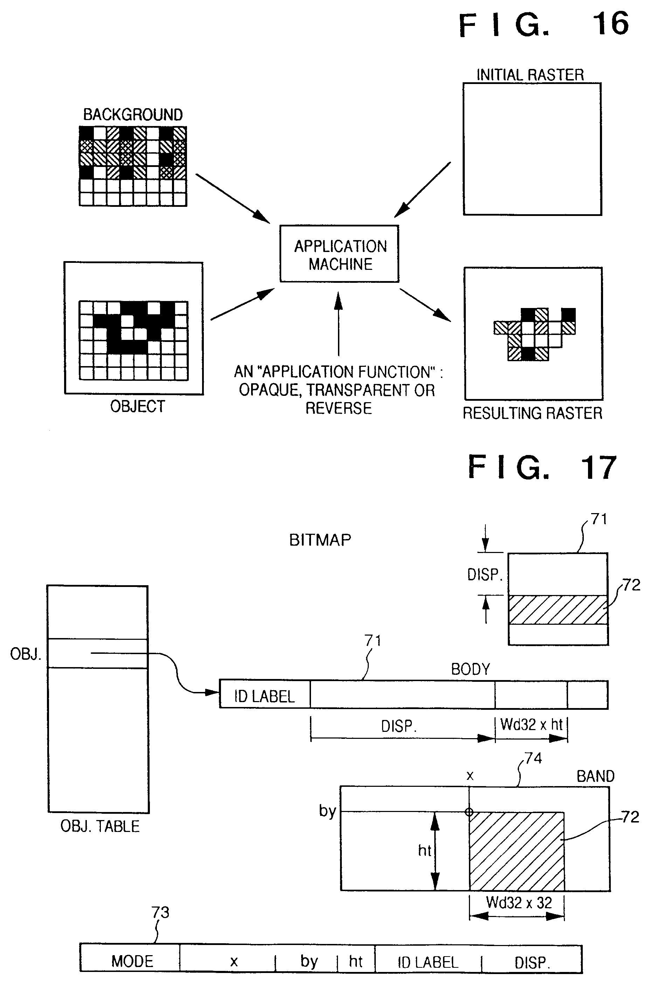

A single application of a DART-encoded image representation to a fully rasterized bit map memory is depicted in Fig. 16. There, a background function defined by a tile or an image is provided to an application machine (rasterOP machine in the first embodiment). An object such as a bit map, run length, trapezoid, box or fixed boundary encoded map is also provided to the application machine. The application machine applies the object onto the background at a specified area in the bit map for the band under consideration so as to convert the initial raster in the bit map into the resulting ruster shown in Fig.16.

Different rendering functions are used for different DART objects, and each rendering function is tailored to render its associated DART object as efficiently as possible. Preferably, the rendering functions are optimized for the speed on the controller's CPU and for the code compactness. Suitable rendering functions are described by Foley, van Dam, Feiner and Hughes in "Computer Graphics: Principles and Practice" (2nd Edition), published in 1987 by Addison-Wesley Publishing Company.

Predictors for the DART representation predict both the memory required to store the DART representation as well as the time (or CPU power) needed to render the DART representation. In general, the memory required to store the DART representation while rendering the i-th band in an image is

$$Memory\ Required_i = \sum_{i \le k \le n} BandSize_k + 2 \times BandRasterSize$$

where $BandSize_k$ is the amount of memory that will be freed after the k-th band is rendered, $BandRasterSize$ is the size of the fully rasterized band rasters appended to the end of page memory, and n is the number of currently-stored bands of DART objects. CPU 41 ensures that this memory requirement does not exceed available memory. In embodiments where images are rendered at degraded resolution when there are insufficient resources available for printing at higher resolution, CPU 41 also ensures that memory requirements do not exceed what is needed to render the image at the degraded resolution, namely:

$$DegradedMemRequired_i = \sum_{i \le k \le n} BandSize_k + (i + l) \times BandRasterSizeDegraded$$

where *BandRasterSizeDegraded* is the size of band rasters at the degraded resolution.

As for predictors of the time (or CPU power) needed to render the DART representation, since rendering involves the generation of both objects and backgrounds, as well as the application of the objects and backgrounds to the raster, the time required to render is dependent on the sum of the times for these functions. The predictor functions reflect this dependency. In practice, an overhead factor is also added to accommodate system overhead prodesses in the rendering process.

Detailed descriptions of the objects and their associated predictor functions follow. In general, however, predictor functions for CPU power all have the form

$$Time = (ApplicationTime + BackgroundTime) \times OverheadFactor$$

where *ApplicationTime* is the time needed to apply the DART object, *BackgroundTime* is the time needed to expand the background, and *OverheadFactor* is the aforementioned overhead factor to accommodate system overhead processes. *BackgroundTime* depends on the area of the background that is expanded for rendering and is also dependent on the type of background and its expansion algorithm.

A bit map object, as its name implies, is simply a bit map raster image of an object. Thus, as shown in Fig. 17, the object 71 includes an identification label followed by a bit map rasterized image of the object 71.

The application of a portion 72 of the bit map object into a band is also depicted in Fig.17. As shown there, the object is to be applied on the band beginning at a displacement *disp* from the beginning of the object and is to be applied at a position *by*, *x* and for a height *ht* within the band. The application is shown at 73 and includes a mode definition which defines the background over which the object is to be applied, as well as the *bx* and *by* coordinates within the band at which the object is to be applied, and the height *ht* over which the object is to be applied. The ID label for the object is specified and the displacement within the object is included.

The predictor function for the CPU power needed to render a bit map application is

$$Time_{BitMap} = (N_1 \times ht + Background) \times OverheadFactor$$

where $N_1$ is an implementation factor related to the number of CPU cycles needed to apply each row of the bit map object.

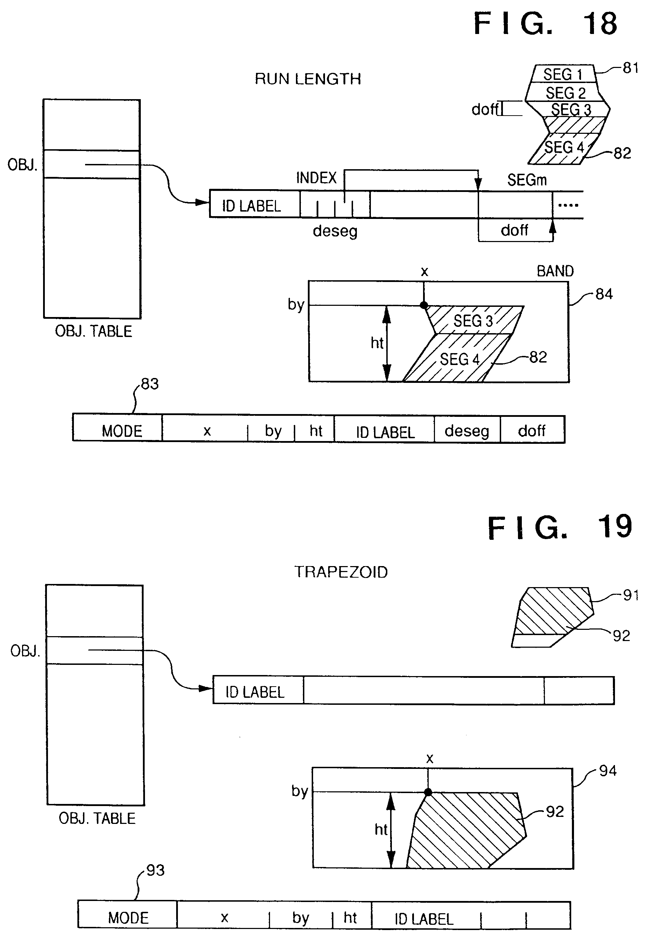

Run length objects are depicted in Fig. 18 Run length objects are segmented, each segment describing successive scan lines and each scan line consisting of a single run length. Thus, as shown in Fig. 18 run length object 81 includes segments 1 through segments 4.

The DART representation of a run length object is shown at 82. The object includes an ID label and a segment index which contains information about the segment rendering time estimation. This information is used by the predictor function. Each segment contains the description of up to a predetermined number of run lengths and each segment is aligned to byte boundaries.

A segment defines successive run lengths in a differential manner, by modifying the segment state while stepping through. The segment consists of two pairs of contour states (left and right). Each contour consists of a position *x* and an increment *dx*.

At the beginning of the segment:

$$xl_0 = dxl_0 = xr_0 = dxr_0 = 0$$

For each scan line *i* the segment defines an advance step of the form: $step_i = \langle advl_i, advr_i \rangle$, that is used as follows:

$$dxl_i = dxl_{i-1} + advl_i$$

$$dxr_i = dxr_{1-1} + advr_i$$

$$xl_i = xl_{i-1} + dxl_i$$

$$xr_i = xr_{i-1} + dxr_i$$

The application of a portion 83 of a run length object 81 in a band 84 is also shown in Fig. 18. There, portion 83 of the run length object 81 is applied at position *by*, *x* within band 84 and continues for a height *ht*. The coded representation for this application is shown at 85 and includes a mode which defines the type of background over which the run length object is applied. *X*, *by* and *ht* coordinate information is provided, as well as an ID label, the segment from the segment index, and the offset from the beginning of the segment.

The predictor function for the CPU power needed to render a run length object is

$$Time_{RunLength} = (N_2 \times ht + N_3 \times area + Background) \times OverheadFactor$$

where the parameters $N_2$ and $N_3$ are similar to those for bit map objects.

Fig. 19 depicts trapezoid objects. Trapezoid objects are not segmented, in contrast with run length objects. This is because it is assumed that trapezoid sequences are usually not intended to be reused (they describe large areas of the raster).

Each object describes successive scan lines, with each scan line consisting of a single run length.

A trapezoid sequence defines successive run lengths with a DDA algorithm. The state consists of two pairs of contour states (left and right). Each contour state consists of a position *X* and a slope.

At the beginning of the trapezoid sequence:

$$xl = slopel = xr = sloper = O$$

The object consists of a sequence of actions. These actions are either modify or paint. A modify action is a pair:

$$modify = \langle modx, modslope \rangle$$

which affects the state

$$x + = modx;$$

$$slope + = modslope;$$

A paint action defines a number count of run lengths by iterating the following steps count times:

$$xl + = slopel;$$

$$xr + + sloper,$$

$$y ++;$$

$$IssueRunLength (xl, xr, y);$$

A paint action with count zero denotes the end of the trapezoid sequence.

Fig.19 also shows the application of a portion 93 of a trapezoid object into a band 94. As shown there, portion 93 is applied to band 94 at position *by, x* and continuing for a height *ht* in the band. The application is shown at 95, and includes a mode which defines the background against which the object is applied, as well as the *x, by* and *ht* coordinates within the band. The ID label for the object is provided. No additional information is needed because trapezoidal objects are not segmented and the entire trapezoid is applied for the distance *ht*.

The predictor function for the CPU power needed to render a trapezoid application is

$$Time_{Trapezoid} = (N_4 \times ht + N_5 \times area + Background) \times OverheadFactor$$

where $N_4$ and $N_5$ are parameters similar to those for bit map objects.

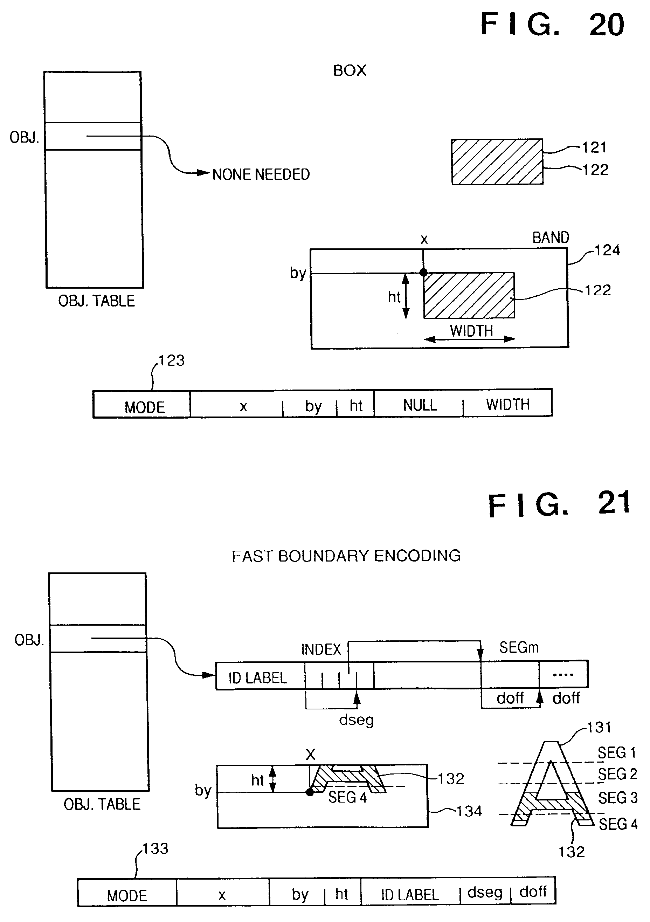

Box objects are depicted in Fig. 20. Rectangular boxes are such a common object that they merit their own optimized representation. In this case there is no need to have an object per se, since the application defines the box, as shown in the figure.

The application of a box object to a band 104 is also depicted in Fig. 20. As shown there, the box object is applied at position *by, x* and continues for a height *ht* and a width *W* in the band. The application is defined by 105 which includes a mode word which defines the background against which the box is applied, and includes coordinates *x, by* and *ht* for the application. A null word is provided followed by the width of the box.

The predictor function for the CPU power needed to render a box object is

$$Time_{Box} = (N_6 \times ht \times W + Background) \times OverheadFactor$$

where $N_6$ is a parameter similar to those for bit map objects.

Fast boundary encoded (FBE) objects are depicted in Fig. 21. An FBE segment describes successive scan lines, and each scan line consists of multiple run lengths.

Again, the segment index contains information (*dt-fbePred-t* record) about the segment rendering time estimation, used by the predictor functions. This information is larger than the one used for run length objects.

A segment defines successive run lengths in a differential manner, by modifying the segment state while stepping through.

The segment state consists of multiple contour states. Each contour consists of a position *x* and an increment *dx*.

At the beginning of the segment:

$$x[k] = dx[k] = 0 \text{ for all values of } k.$$

The segment consists of a series of commands, chosen among the following:

- *adv*: advance corresponding contour as in the case of RLSeqs.
- *close* : delete the next two contours.
- *open* : insert two new contours between the current contour and the next one.

For each scan line *i* the segment defines an advance step of the form

$$step_i = \langle linechange, comm_1, comm_2..., comm_n \rangle$$

that is used to transform the segment state. Linechange specifies the change (increase or decrease) of the number of pairs of contours with respect to the previous scan line, or a reset at segment boundaries. The execution of *commi*, *comm_2*, ..., *comm_n* brinGL the number of contours in accordance to *linechange*. A *linechange* that makes the number of contour pairs negative denotes the end of the segment.

Fig.21 also shows how a portion 114 of FBE object 111 is applied to band 115. As shown in Fig.21, the portion 114 is applied to the band at position *by, x,* for a height *ht* beginning at an offset *doff* from the beginning of segment 3.

The application is defined at 116 which includes a mode word for defining the background against which the FBE object is applied. 116 further includes the *x, by* and *ht* coordinates of the application, as well as the ID label for the object, the segment that is to be applied, and the offset from the beginning of the segment.

The predictor function for the CPU power needed to render an FBE application is the sum of the CPU power needed for each segment, where the CPU power for each segment is dependent on the number of run lengths that need to be rendered and the height of the segment.

Appendix A

GRAPHIC LANGUAGE COMMANDS INSTRUCTION SET

This appendix is a summary of the GL commands instruction set. It defines instructions in terms of their effects on the system and semantic actions.

The notation below describes the stack manipulation the graphic processor performs when it executes an instruction:

Instruction $arg_1$ $arg_2$ ... $arg_n$ Instruction $result_1$ ...$result_k$

where the sequence $arg_1$ $arg_2$ ... $arg_n$ denotes the argument list on the stack (with $arg_n$ at the top) that the instruction consumes. Execution of the instruction replaces the argument list with the sequence $result_1$ ...$result_k$ .

ARITHMETIC AND RELATIONAL OPERATIONS

Use these instructions to execute arithmetic and relational operations on the system stack.

add   $number_1$ $number_2$ GLop.add number (= $number_1$ + $number_2$)
        Addition.
sub   $number_1$ $number_2$ GLop.sub number (= $number_1$ −

$number_2$)

Substraction.

mul    $number_1$ $number_2$ GLop.mul number (= $number_1$ * $number_2$)

Multiplication.

div    $number_1$ $number_2$ GLop.div number (= $number_1$ /$number_2$)

Division (integer).

mod    $number_1$ $number_2$ GLop.mod number (= $number_1$ mod $number_2$)

Modulus.

neg    $number$ GLop.neg number (= $-number$)

Arithmetic negate.

shright    $number_1$ $number_2$ GLop.shright number (= $number_1$ >> $number_2$)

Shift right.

shleft    $number_1$ $number_2$ GLop.shright number (= $number_1$ << $number_2$)

Shift left.

## OTHER ARITHMETIC/RELATIONAL INSTRUCTIONS

GL commands support a number of extended operations, including vector arithmetic (using fixed coordinates) and the necessary fixed arithmetic trigonometric functions (fast approximations).

STACK MANIPULATION

These operations handle the system stack.

```
loadq_0   GLop.loadq_0            num(=0)
          loadq_1GLop.loadq_1     num(=1)
          loadq_2GLop.1·adq_2     num(=2)
          loadq_3GLop.l·adq_3     num(=3)
          loadq_4GLop.loadq_4     num(=4)
          loadq_5GLop.loadq_5     num(=5)
          loadq_6GLop.loadq_6     num(=6)
          loadq_7GLop.loadq_7     num(=7)
```

Use the loadquick family of instructions to load very quickly the system stack with the most commonly used arithmetic values.

pop   *anyvalue* GLop.pop

Discards the top of the stack.

dup   *anyvalue* GLop.dup *anyvalue anyvalue*

Duplicates the top of the stack.

exch *anyvalue$_1$ anyvalue$_2$* GLop.exch *anyvalue$_2$*

*anyvalue$_1$*

Exchanges the top two cells in the stack.

OTHER STACK MANIPULATION INSTRUCTIONS

GL commands support a number of possible extension operations for handling the stack, including indexing, copying, etc.

RECORDS

Use records to store permanent information. The information in a record is structured as an

array. Graphic language commands cause records to be stored as GL objects in GL object storage (see below).

The concept of a current record serves as a mechanism to compress GL code: Once an object is declared the current record, all load and store operations refer to that object.

At the beginning of each frame, the system provides a default record.

record *object*|d| GLop.record

The object *object*|d| becomes the current record.

load *displ* GLop.load

Pushes the contents of memory at record location *displ* onto the stack.

store *value displ* GLop.store

Pops *value* on top of stack into record location *displ*.

## ARRAY HANDLING

These instructions create arrays and access array elements on the stack.

## OBJECT HANDLING

These instructions create and manipulate GL objects.

objdelete *objHandle* GLop.objdelete

Removes the object *handle* from memory.

objmake *objHandle* *size* GLop.objcopy

Performs a "delete" on the object *objHandle*, then creates a new object of size *size*.

markarrayGLop.markarray + n + $b_1$ + ... + $b_n$ *inlineHandle*

markbitmapGLop.markbitmap + n + $b_1$ + ... + $b_n$ *inlineHandle*

marktrap GLop.marktrap + n + $b_1$ + ... + $b_n$ *inlineHandle*

markproc GLop.markproc + n + $b_1$ + ... $b_n$ *inlineHandle*

These instructions declare an *inline* object, leaving an *inlineHandle* handle on the top of the stack for future reference.

objdef      *inlineHandle objHandle* GLop.objdef

Performs "delete" on the object *objHandle*, creates a new object of specified size, then copies the contents of *inlineHandle* onto the new object.

CONTROL

These instructions control the flow of execution for the GL processor.

call         *executableArray* GLop.call

Invokes the procedure denoted by the handle *executableArray*.

return     GLop.return

Returns executable flow back from the procedure currently executing. If the GL processor is not executing a procedure, this instruction finishes the current frame.

if           *bool* execArray$_{true}$GLop.if

ifelse       *bool* execArray$_{true}$
             execArray$_{false}$GLop.ifelse

These operations conditionally execute the corresponding procedure according to the value of *bool* (0 means false, non zero means true).

loop         number *execArray* GLop.loop

The *execArray* is executed *number* times. A negative number produces an infinite loop.

        break        GLop.break

        continue   GLop.continue

        Breaks or continues within the currently executed loop.

        switch        *number* GLop.switch --

        Switches to the program segment corresponding to the case value *number*. Case values are limited to the set $B=\{0..255\}$

CONTEXT HANDLING

        context        *contextNumber* GLop.context --

        Sets the active context to *contextNumber*. There are a fixed number of possible contexts.

        *contexDefexecutableArray contextNumber* GLop.contextDef

Defines context *contextNumber* as per procedure *executableArray*. Context procedures contain a switch statement that is used to map codes onto actions.

## PROCEDURE DEFINITIONS

Procedures are simply executable arrays. A procedure handle is an array handle or an object handle.

## SYSTEM SERVICES ACCESS

System services are accessed just like normal procedures, except that system procedure handles are part of a distinguished set.

## MASK GENERATION

These instruction activate the primitive mask generators provided by GL.

Before activating any of the generators, a GL program must set the state information corresponding to the generator parameters.

PixelBit   *bitmapHandle x y* GLop.PixelBit

Performs a pixelbit operation of *bitmapHandle* at position *<x,y>*.

Trapezoid*trapezoidHandle* GLop.Trapezoid

Activates the Trapezoid Mask Generator.


RLE    GLop.RLE


Activates the Run Length encoded Mask Generator.


LINE GENERATION MASKS

These instructions activate the mask generators for line rendering.

These masks generators use GL state variables to implicitly define position, line width, etc.


ACCESSING THE INPUT STREAM

Members of this class of primitives access the input stream, to create objects in the stack and/or the array stack.


getc1      GLop.getc1 num (= b1)


getc2      GLop.getc2 num (= (b1 << 8) + b2)


getc3      GLop.getc3 num (= (((b1 << 8) +b2) <<

```
8) + b3)


getc4        GLop.getc4 num (= ((((b1 << 8) + b2)

             << 8) + b3) << 8) + b4)
```

Gets next 1 to 4 bytes (denoted b1, b2, b3 and b4) from the input stream and pushes them onto the stack as a scalar integer value.

BACKGROUND GENERATION

```
image        a b c d e f image GLop.Image
```

Sets image as the background image array. The transformation [a b c d e f] denotes the mapping of raster pixels onto image array elements.

```
image        0 GLop.Image
```

Resets the background image array as empty.

```
gray         grayLevel GLop.gray
```

Sets the background to gray, of level *grayLevel*.

```
bgtile      bitmapHandle GLop.bgtile
```

Sets the background to be tiled by bitmapHandle.

```
bgmodify offsetX offsetY rotation GLop.bgtile
```

Modifies the background tile by shifting it <offsetX, offsetY> and rotating it by the amount specified in rotation.

STATE OPERATIONS

```
screen      objHandle GLop.screen
```

Sets the dithering screen of objHandle.

```
clip trapHandle GLop.clip
```

Adds trapHandle to the clipping region.

```
clip 0 GLop.clip
```

Zeros the clipping region.

PRAGMATICS

The GL Interpreter ignores this class of

instructions; pragmatics are for the use of other

subsystems and/or tools (Debug module, Generation

Libraries, etc.)


pragma GLop.pragma + {n} + $b_1$ + $b_2$ + ... + $b_n$


The GL Interpreter ignores the (n+2) bytes

comprising this instruction.  Use pragma as a

comment, a synchronization tag for debugging

purposes, a grouping tag, etc.


## Claims

1. An image processing apparatus comprising:

   converting means (41,43;S603) operable to convert print commands (PDL) into first intermediate code data; rendering means (46) operable to render the first intermediate code data into a raster image; and a print engine (45) operable to perform a printing operation using the raster image, characterised by further comprising the intermediate code being dynamically adjustable so as to convert a print command by primitives of the intermediate code requiring different amounts of resources; first determining means (41;S606) operable to determine whether or not a printing operation is possible on the basis of usage of a plurality of printer resources required by the first intermediate code data; and controlling means (41;S613) for, when said determining means determines that the printing operation is impossible, generating second intermediate code data so as to adjust the intermediate code to the plurality of existing printer resources to enable the printing operation, and controlling the rendering means and the print engine such that the printing operation is performed using a raster image obtained by rendering the second intermediate code data.

2. An apparatus according to claim 1, comprising second determining means (41) operable to determine whether the printing operation is possible on the basis of a level of printer resource usage required using the second intermediate code data and wherein, if the printing operation is determined not to be possible, the controlling means is operable to control the rendering means such that the second intermediate code data is rendered into a raster image having degraded image quality.

3. An apparatus according to any of claims 1 and 2, wherein said printer resources taken into consideration comprises at least one of computing power, memory power, and bandwidth.

4. An apparatus according to claim 3, wherein said printer resources comprises at least memory, and wherein said controlling means is adapted to generate the second intermediate code data to use more computing power in the event that required memory usage exceeds the available memory resource.

**5.** An apparatus according to claim 3, wherein said determining means is operable to determine that the printing operation is possible if the required computing power usage does not exceed the available computing power resource.

**6.** An apparatus according to claim 3, wherein said printer resources comprise at least one of the computer power and memory, and wherein said controlling means is adapted to use second intermediate code data that utilizes more bandwidth in the event that the required computing power or memory usage exceeds available computing power or memory usage resource respectively.

**7.** An apparatus according to any preceding claim, wherein said determining means is adapted to recognize resource usage in accordance with the primitive used to form the first intermediate code data.

**8.** An apparatus according to any preceding claim, wherein at least one of said first and second intermediate code data comprises at least one of a bit map object, a run length object, a trapezoid object, a box object, and a fixed boundary encoding object.

**9.** An apparatus according to claim 8, wherein said rendering means includes means for applying an object against a background with an application function so as to achieve a rasterization of the representation.

**10.** An apparatus according to any preceding claim, further comprising:

a memory (44) adaptably partitioned into at least first and second portions, the first portion for storing the first intermediate code data and the second portion for storing at least a portion of a raster image; and
wherein the rendering means is operable to render the first intermediate code data stored in the first portion of said memory into a raster image in the second portion of said memory.

**11.** An apparatus according to claim 10, wherein the first portion of said memory is adapted to store the first intermediate code data in bands, and wherein said second portion of said memory is adapted to store raster images of corresponding bands of information.

**12.** An apparatus according to claim 10, wherein, when there is insufficient computing power to render the band of information in a predetermined period of time, the band is pre-rasterized by said rendering means into a third portion of said memory.

**13.** An apparatus according to claim 10, wherein, in the case that there are insufficient resources available for one band of information, then that band of information is degraded and some other bands are not.

**14.** An apparatus according to claim 2, wherein the degraded image is an image having a lower resolution.

**15.** An apparatus according to claim 2, wherein the degraded image is an image having a lower color resolution or a lesser number of halftone.

**16.** An apparatus according to any preceding claim wherein the print engine is operable to scanningly print information at a uniform rate.

**17.** An apparatus according to claim 10, wherein said rendering means is adapted to postpone rendering the second intermediate code data into a full raster image until previous print operations have been completed.

**18.** Apparatus as claimed in any preceding claim comprising predicting means operable to predict a plurality of levels of usage of respective printer resources required for the print engine to perform the printing operation using the intermediate code data, whereby said determining means is operable to determine whether or not a printing operation is possible on the basis of the predicted levels.

**19.** An image processing method comprising the steps of:

converting (S603) print commands into first intermediate code data;
rendering the first intermediate code data into a raster image; and
rendering the first intermediate code data into a raster image; and
performing a printing operation by operation of a print engine (45) using the raster image, characterised by further comprising the intermediate code being dynamically adjustable so as to convert a print command by primitives of the intermediate code requiring different amounts of resources;

determining (S606) whether or not a printing operation is possible on the basis of usage of a plurality of printer resources required by the first intermediate code data; and

controlling (S613), when said determining means determines that the printing operation is impossible, the generating of second intermediate code data so as to adjust the intermediate code to the plurality of printer resources and controlling the rendering step and the print engine such that the printing operation is performed using a raster image obtained by rendering the second intermediate code data.

20. A method according to claim 19, comprising a second determining step to determine whether the printing operation is possible on the basis of a level of printer resource usage required using the second intermediate code data and wherein, if the printing operation is determined not to be possible, the controlling step controls the rendering means such that the second intermediate code data is rendered into a raster image having degraded image quality.

21. A method according to claim 19, wherein said printer resources taken into consideration comprise at least one of computing power, memory power, and bandwidth.

22. A method according to claim 21, wherein said printer resources comprises at least memory and wherein said controlling step generates the second intermediate code data to use more computing power in the event that required memory usage exceeds the available memory resource.

23. A method according to claim 21, wherein said determining step determines that the printing operation is possible if the required computing power does not exceed the available computing power resource.

24. A method according to claim 21, wherein said printer resources comprise at least one of the computer power and memory, and wherein said controlling step uses second intermediate code data that utilizes more bandwidth in the event that the required computing power or memory usage exceeds the available computing power or memory usage resource respectively.

25. A method according to claim 20, wherein said printer resources comprises at least one of computing power, memory power, and bandwidth.

26. A method according to claim 19, wherein at least one of said first and second intermediate code data comprises at least one of a bit map object, a run length object, a trapezoid object, a box object, and a fixed boundary encoding object.

27. A method according to claim 26, wherein said rendering means applies an object against a background with an application function so as to achieve a rasterization of the representation.

28. A method according to any of claims 19 to 27, further comprising:

adaptably partitioning a memory into at least first and second portions, storing the first intermediate code data in the first portion and storing at least a portion of a raster image in the second portion; and
wherein the rendering step renders the first intermediate code data stored in the first portion of said memory into a raster image in the second portion of said memory.

29. A method according to claim 28, wherein the first portion of said memory stores the first intermediate code data in bands, and wherein said second portion of said memory stores raster images of corresponding bands of information.

30. A method according to claim 28, wherein, when there is insufficient computing power to render the band of information in a predetermined period of time, the band is pre-rasterized by said rendering step into a third portion of said memory.

31. A method according to claim 28, wherein in the case that there are insufficient resources available for one band of information, then that band of information is degraded and some other bands are not.

32. A method according to claim 20, wherein the degraded image is an image having a lower resolution.

**33.** A method according to claim 20, wherein the degraded image is an image having a lower color resolution or a lesser number of halftone.

**34.** A method according to any of claims 19 to 33 wherein the print engine scanningly prints print information at a uniform rate.

**35.** A method according to claim 20, wherein said second rendering step postpones rendering the second intermediate code data into a full raster image until previous print operations have been completed.

**36.** A method as claimed in any of claims 19 to 35 including the step of predicting a plurality of levels of usage of respective printer resources required for the printing operation using the intermediate code data and wherein the determining step determines whether or not a printing operation is possible on the basis of the predicted levels.

**Patentansprüche**

**1.** Bildverarbeitungsvorrichtung, umfassend:

eine Umwandlungseinrichtung (41, 43; S603), betreibbar zum Umwandeln von Druckbefehlen (PDL) in erste Zwischencodedaten;
eine Rendereinrichtung (46), betreibbar zum Rendern der ersten Zwischencodedaten in ein Rasterbild; und
ein Druckwerk (45), betreibbar zum Durchführen eines Druckvorgangs unter Verwendung des Rasterbilds, dadurch gekennzeichnet, daß
der Zwischencode dynamisch einstellbar ist, um einen Druckbefehl durch Grundelemente des unterschiedliche Mengen von Betriebsmitteln erfordernden Zwischencodes umzuwandeln;
eine erste Ermittlungseinrichtung (41; S606) vorgesehen ist, betreibbar zum Ermitteln, ob ein Druckvorgang möglich ist oder nicht, auf der Grundlage der Nutzung einer Vielzahl von Druckerbetriebsmitteln, die durch die ersten Zwischencodedaten benötigt werden; und
eine Steuereinrichtung (41; S613) vorgesehen ist zum, wenn die Ermittlungseinrichtung ermittelt, daß der Druckvorgang unmöglich ist, Erzeugen zweiter Zwischencodedaten, um den Zwischencode auf die Vielzahl vorhandener Druckerbetriebsmittel einzustellen, um den Druckvorgang zu ermöglichen, und Steuern der Rendereinrichtung und des Druckwerks derart, daß der Druckvorgang unter Verwendung eines durch Rendern der zweiten Zwischencodedaten erhaltenen Rasterbilds durchgeführt wird.

**2.** Vorrichtung nach Anspruch 1, umfassend eine zweite Ermittlungseinrichtung (41), betreibbar zum Ermitteln, ob der Druckvorgang möglich ist, auf der Grundlage eines Niveaus einer unter Verwendung der zweiten Zwischencodedaten erforderlichen Druckerbetriebsmittelnutzung, und bei der, falls ermittelt wird, daß der Druckvorgang nicht möglich ist, die Steuereinrichtung betreibbar ist zum Steuern der Rendereinrichtung derart, daß die zweiten Zwischencodedaten in ein Rasterbild mit verschlechterter Bildqualität gerendert werden.

**3.** Vorrichtung nach Anspruch 1 oder 2, bei der die in Betracht gezogenen Druckerbetriebsmittel zumindest eines von Rechenleistung, Speicherleistung und Bandbreite umfassen.

**4.** Vorrichtung nach Anspruch 3, bei der die Druckerbetriebsmittel zumindest Speicher umfassen, und bei der die Steuereinrichtung ausgelegt ist zum Erzeugen der zweiten Zwischencodedaten, um mehr Rechenleistung in dem Fall zu verwenden, in dem die erforderliche Speichernutzung die verfügbaren Speicherbetriebsmittel überschreitet.

**5.** Vorrichtung nach Anspruch 3, bei der die Ermittlungseinrichtung betreibbar ist zum Ermitteln, daß der Druckvorgang möglich ist, falls die erforderliche Rechenleistungsnutzung die verfügbaren Rechenleistungsbetriebsmittel nicht überschreitet.

**6.** Vorrichtung nach Anspruch 3, bei der die Druckerbetriebsmittel zumindest eine von Rechenleistung und Speicher umfassen, und bei der die Steuereinrichtung in dem Fall, in dem die erforderliche Rechenleistung oder Speichernutzung die verfügbaren Rechenleistungs- bzw. Speichernutzungsbetriebsmittel überschreitet, ausgelegt ist zur Verwendung zweiter Zwischencodedaten, die mehr Bandbreite nutzen.

**7.** Vorrichtung nach einem der vorangehenden Ansprüche, bei der die Ermittlungseinrichtung ausgelegt ist zum Erkennen der Betriebsmittelnutzung in Übereinstimmung mit der zur Erzeugung der ersten Zwischencodedaten verwendeten Grundelemente.

8. Vorrichtung nach einem der vorangehenden Ansprüche, bei der zumindest eine der ersten und zweiten Zwischencodedaten zumindest eines von einem Bitmap-Ojekt, einem Lauflängen-Objekt, einem trapezoidalen Objekt, einem kastenförmigen Objekt und einem Objekt mit fester Randcodierung umfassen.

9. Vorrichtung nach Anspruch 8, bei der die Rendereinrichtung eine Einrichtung zum Anlegen eines Objekts gegen einen Hintergrund mit einer Anlegefunktion beinhaltet, um eine Rasterisierung der Darstellung zu erreichen.

10. Vorrichtung nach einem der vorangehenden Ansprüche, ferner umfassend:

einen Speicher (44), der anpaßbar in zumindest einen ersten und einen zweiten Abschnitt partitioniert ist, mit dem ersten Anschnitt zum Speichern der ersten Zwischencodedaten und dem zweiten Abschnitt zum Speichern zumindest eines Anschnitts eines Rasterbilds; und
bei der die Rendereinrichtung betreibbar ist zum Rendern der ersten, in dem ersten Abschnitt des Speichers gespeicherten Zwischencodedaten in ein Rasterbild in dem zweiten Abschnitt des Speichers.

11. Vorrichtung nach Anspruch 10, bei der der erste Abschnitt des Speichers ausgelegt ist, die ersten Zwischencodedaten in Bändern zu speichern, und bei der der zweite Abschnitt des Speichers ausgelegt ist, Rasterbilder entsprechender Bänder von Informationen zu speichern.

12. Vorrichtung nach Anspruch 10, bei der, wenn nicht ausreichend Rechenleistung zum Rendern des Bands von Informationen in einer vorbestimmten Zeitdauer vorhanden ist, das Band durch die Rendereinrichtung in einen dritten Abschnitt des Speichers vorgerastert wird.

13. Vorrichtung nach Anspruch 10, bei der in dem Fall, daß nicht ausreichend Betriebsmittel für ein Band von Informationen zur Verfügung stehen, dieses Band dann verschlechtert wird und einige andere Bänder nicht.

14. Vorrichtung nach Anspruch 2, bei der das verschlechterte Bild ein Bild mit einer niedrigeren Auflösung ist.

15. Vorrichtung nach Anspruch 2, bei der das verschlechterte Bild ein Bild mit einer niedrigeren Farbauflösung oder einer geringeren Halbtonanzahl ist.

16. Vorrichtung nach einem der vorangehenden Ansprüche, bei der das Druckwerk zum abtastenden Drucken von Informationen mit einer vorbestimmten Rate betreibbar ist.

17. Vorrichtung nach Anspruch 10, bei der die Rendereinrichtung ausgelegt ist zum Verschieben des Renderns der zweiten Zwischencodedaten in ein Vollrasterbild, bis vorangehende Druckvorgänge beendet worden sind.

18. Vorrichtung nach einem der vorangehenden Ansprüche, umfassend eine Vorhersageeinrichtung, die betreibbar ist zum Vorhersagen einer Vielzahl von Nutzungsniveaus jeweiliger Druckerbetriebsmittel, die für das Druckwerk erforderlich sind, um den Druckvorgang unter Verwendung der Zwischencodedaten durchzuführen, wobei die Ermittlungseinrichtung betreibbar ist zum Ermitteln auf der Grundlage der vorhergesagten Niveaus, ob ein Druckvorgang möglich ist oder nicht.

19. Bildverarbeitungsverfahren, umfassend die Schritte:

Umwandeln (S603) von Druckbefehlen in erste Zwischencodedaten;
Rendern der ersten Zwischencodedaten in ein Rasterbild; und
Durchführen eines Druckvorgangs durch Betreiben eines Druckwerks (45) unter Verwendung des Rasterbilds, gekennzeichnet durch
Umfassen, daß der Zwischencode dynamisch einstellbar ist, um einen Druckbefehl durch Grundelemente des unterschiedliche Mengen von Betriebsmitteln erfordernden Zwischencodes umzuwandeln;
Ermitteln (S606), ob ein Druckvorgang möglich ist oder nicht, auf der Grundlage der Nutzung einer Vielzahl von Drukkerbetriebsmitteln, die durch die ersten Zwischencodedaten benötigt werden; und
Steuern (S613), wenn die Ermittlungseinrichtung ermittelt, daß der Druckvorgang unmöglich ist, des Erzeugens zweiter Zwischencodedaten, um den Zwischencode auf die Vielzahl von Drukkerbetriebsmitteln einzustellen, und Steuern des Renderschritts und des Druckwerks derart, daß der Druckvorgang unter Verwendung eines durch Rendern der zweiten Zwischencodedaten erhaltenen Rasterbilds durchgeführt wird.

**20.** Verfahren nach Anspruch 19, umfassend einen zweiten Ermittlungsschritt zum Ermitteln, ob der Druckvorgang möglich ist, auf der Grundlage eines Niveaus einer unter Verwendung der zweiten Zwischencodedaten erforderlichen Druckerbetriebsmittelnutzung, und bei dem, falls ermittelt wird, daß der Druckvorgang nicht möglich ist, der Steuerschritt die Rendereinrichtung derart steuert, daß die zweiten Zwischencodedaten in ein Rasterbild mit verschlechterter Bildqualität gerendert werden.

**21.** Verfahren nach Anspruch 19, bei dem die in Betracht gezogenen Druckerbetriebsmittel zumindest eine von Rechenleistung, Speicherleistung und Bandbreite umfassen.

**22.** Verfahren nach Anspruch 21, bei dem die Druckerbetriebsmittel zumindest Speicher umfassen, und bei dem der Steuerschritt die zweiten Zwischencodedaten erzeugt, um mehr Rechenleistung in dem Fall zu verwenden, in dem die erforderliche Speichernutzung die verfügbaren Speicherbetriebsmittel überschreitet.

**23.** Verfahren nach Anspruch 21, bei dem der Ermittlungsschritt ermittelt, daß der Druckvorgang möglich ist, falls die erforderliche Rechenleistung die verfügbaren Rechenleistungsbetriebsmittel nicht überschreitet.

**24.** Verfahren nach Anspruch 21, bei dem die Druckerbetriebsmittel zumindest eine von Rechenleistung und Speicher umfassen, und bei dem der Steuerschritt in dem Fall, in dem die erforderliche Rechenleistung oder Speichernutzung die verfügbaren Rechenleistungs- bzw. Speichernutzungsbetriebsmittel überschreitet, zweite Zwischencodedaten verwendet, die mehr Bandbreite nutzen.

**25.** Verfahren nach Anspruch 20, bei dem die Druckerbetriebsmittel zumindest eine von Rechenleistung, Speicherleistung und Bandbreite umfassen.

**26.** Verfahren nach Anspruch 19, bei dem zumindest eine der ersten und zweiten Zwischencodedaten zumindest eines von einem Bitmap-Objekt, einem Lauflängen-Objekt, einem trapezoidalen Objekt, einem kastenförmigen Objekt und einem Objekt mit fester Randcodierung umfassen.

**27.** Verfahren nach Anspruch 26, bei dem die Rendereinrichtung mit einer Anlegefunktion ein Objekt gegen einen Hintergrund anlegt, um eine Rasterisierung der Darstellung zu erreichen.

**28.** Verfahren nach einem der Ansprüche 19 bis 27, ferner um fassend:

anpaßbares Partitionieren eines Speichers in zumindest einen ersten und einen zweiten Abschnitt und Speichern der ersten Zwischencodedaten in dem ersten Abschnitt und Speichern zumindest eines Abschnitts eines Rasterbilds in dem zweiten Abschnitt; und
bei dem der Renderschritt die in dem ersten Abschnitt des Speichers gespeicherten ersten Zwischencodedaten in ein Rasterbild in dem zweiten Abschnitt des Speichers rendert.

**29.** Verfahren nach Anspruch 28, bei dem der erste Abschnitt des Speichers die ersten Zwischencodedaten in Bändern speichert, und bei dem der zweite Abschnitt des Speichers Rasterbilder entsprechender Bänder von Informationen speichert.

**30.** Verfahren nach Anspruch 28, bei dem, wenn nicht ausreichend Rechenleistung zum Rendern des Bands von Informationen in einer vorbestimmten Zeitdauer vorhanden ist, das Band durch den Renderschritt in einen dritten Abschnitt des Speichers vorgerastert wird.

**31.** Verfahren nach Anspruch 28, bei dem in dem Fall, daß nicht ausreichend Betriebsmittel für ein Band von Informationen zur Verfügung stehen, dieses Band dann verschlechtert wird und einige andere Bänder nicht.

**32.** Verfahren nach Anspruch 20, bei dem das verschlechterte Bild ein Bild mit einer niedrigeren Auflösung ist.

**33.** Verfahren nach Anspruch 20, bei dem das verschlechterte Bild ein Bild mit einer niedrigeren Farbauflösung oder einer geringeren Halbtonanzahl ist.

**34.** Verfahren nach einem der Ansprüche 19 bis 33, bei dem das Druckwerk abtastend Druckinformationen mit einer vorbestimmten Rate druckt.

**35.** Verfahren nach Anspruch 20, bei dem der zweite Renderschritt das Rendern der zweiten Zwischencodedaten in ein Vollrasterbild verschiebt, bis vorangehende Druckvorgänge beendet worden sind.

**36.** Verfahren nach einem der Ansprüche 19 bis 35, beinhaltend den Schritt des Vorhersagens einer Vielzahl von Nutzungsniveaus jeweiliger Druckerbetriebsmittel, die für den Druckvorgang unter Verwendung der Zwischencodedaten erforderlich sind, und bei dem der Ermittlungsschritt auf der Grundlage der vorhergesagten Niveaus ermittelt, ob ein Druckvorgang möglich ist oder nicht.

**Revendications**

**1.** Appareil de traitement d'images comprenant:

des moyens de conversion (41, 43; S603) qu'on peut faire fonctionner pour convertir des ordres d'impression (PDL) en premières données de code intermédiaire;

des moyens de rendu (46) qu'on peut faire fonctionner pour effectuer une opération de rendu transformant les premières données de code intermédiaire en une image tramée; et

un moteur d'impression (45) qu'on peut faire fonctionner pour effectuer une opération d'impression utilisant l'image tramée, caractérisé en ce qu'il comprend en outre le fait que le code intermédiaire peut être ajusté de manière dynamique afin de convertir un ordre d'impression par des primitives du code intermédiaire exigeant différentes quantités de ressources;

des premiers moyens de détermination (41; S606) qu'on peut faire fonctionner pour déterminer si une opération d'impression est possible, sur la base de l'usage d'une pluralité de ressources d'imprimante qui sont exigées par les premières données de code intermédiaire; et

des moyens de commande (41; S613) pour générer des secondes données de code intermédiaire, lorsque les moyens de détermination déterminent que l'opération d'impression est impossible, de façon à ajuster le code intermédiaire à la pluralité de ressources d'imprimante existantes, pour permettre l'opération d'impression, et commander les moyens de rendu et le moteur d'impression de façon que l'opération d'impression soit effectuée en utilisant une image tramée obtenue en appliquant une transformation de rendu aux secondes données de code intermédiaire.

**2.** Appareil selon la revendication 1, comprenant des seconds moyens de détermination (41) qu'on peut faire fonctionner pour déterminer si l'opération d'impression est possible, sur la base d'un niveau d'usage de ressources d'imprimante exigé en utilisant les secondes données de code intermédiaire, et dans lequel, si on détermine que l'opération d'impression n'est pas possible, les moyens de commande peuvent être actionnés pour commander les moyens de rendu de façon que les secondes données de code intermédiaire soient transformées par une opération de rendu en une image tramée ayant une qualité d'image dégradée.

**3.** Appareil selon l'une quelconque des revendications 1 et 2, dans lequel les ressources d'imprimante prises en considération comprennent l'une au moins des suivantes : la puissance de calcul, la capacité de mémoire et la largeur de bande.

**4.** Appareil selon la revendication 3, dans lequel les ressources d'imprimante comprennent au moins de la mémoire, et dans lequel les moyens de commande sont adaptés pour générer les secondes données de code intermédiaire en utilisant davantage de puissance de calcul dans le cas où l'usage de mémoire exigé dépasse la ressource de mémoire disponible.

**5.** Appareil selon la revendication 3, dans lequel on peut faire fonctionner les moyens de détermination pour déterminer que l'opération d'impression est possible, si l'usage de puissance de calcul exigé ne dépasse pas la ressource de puissance de calcul disponible.

**6.** Appareil selon la revendication 3, dans lequel les ressources d'imprimante comprennent au moins une ressource parmi la puissance de calcul et la mémoire, et dans lequel les moyens de commande sont adaptés pour utiliser des secondes données de code intermédiaire qui utilisent davantage de largeur de bande dans le cas où l'usage de mémoire ou de puissance de calcul exigé dépasse respectivement la ressource d'usage de mémoire ou de puissance de calcul disponible.

**7.** Appareil selon l'une quelconque des revendications précédentes, dans lequel les moyens de détermination sont adaptés pour reconnaître l'usage de ressource conformément à la primitive utilisée pour former les premières données de code intermédiaire.

8. Appareil selon l'une quelconque des revendications précédentes, dans lequel au moins une catégorie de données parmi les premières et secondes données de code intermédiaire comprend au moins un des objets suivants : un objet de grille de bits, un objet de longueur de plage, un objet de trapèze, un objet de boîte et un objet de codage à frontière fixe.

9. Appareil selon la revendication 8, dans lequel les moyens de rendu comprennent des moyens pour appliquer un objet contre un fond avec une fonction d'application, de façon à réaliser un tramage de la représentation.

10. Appareil selon l'une quelconque des revendications précédentes, comprenant en outre :

une mémoire (44) divisée de façon adaptable en au moins des première et seconde parties, la première partie étant destinée à stocker les premières données de code intermédiaire et la seconde partie étant destiné à stocker au moins une partie d'une image tramée; et
dans lequel on peut faire fonctionner les moyens de rendu pour rendre les premières données de code intermédiaire stockées dans la première partie de la mémoire, en les transformant en une image tramée dans la seconde partie de la mémoire.

11. Appareil selon la revendication 10, dans lequel la première partie de la mémoire est adaptée pour stocker les premières données de code intermédiaire en bandes, et dans lequel la seconde partie de la mémoire est adaptée pour stocker des images tramées de bandes d'information correspondantes.

12. Appareil selon la revendication 10, dans lequel, lorsqu'il y a une puissance de calcul insuffisante pour effectuer le rendu de la bande d'information en une durée prédéterminée, la bande est pré-tramée par les moyens de rendu en étant placée dans une troisième partie de la mémoire.

13. Appareil selon la revendication 10, dans lequel, dans le cas où des ressources disponibles sont insuffisantes pour une bande d'information, cette bande d'information est dégradée et certaines autres bandes ne le sont pas.

14. Appareil selon la revendication 2, dans lequel l'image dégradée est une image ayant une résolution inférieure.

15. Appareil selon la revendication 2, dans lequel l'image dégradée est une image ayant une résolution de couleur inférieure ou un plus petit nombre de demi-teintes.

16. Appareil selon l'une quelconque des revendications précédentes, dans lequel on peut faire fonctionner le moteur d'impression de façon à imprimer de l'information avec balayage à une cadence uniforme.

17. Appareil selon la revendication 10, dans lequel les moyens de rendu sont adaptés pour reporter l'opération de rendu des secondes données de code intermédiaire en une image tramée complète, jusqu'à ce que des opérations d'impression précédentes aient été achevées.

18. Appareil selon l'une quelconque des revendications précédentes, comprenant des moyens de prédiction qu'on peut faire fonctionner pour prédire une pluralité de niveaux d'usage de ressources d'imprimante respectives nécessaires au moteur d'impression pour effectuer l'opération d'impression en utilisant les données de code intermédiaire, grâce à quoi on peut faire fonctionner les moyens de détermination pour déterminer si une opération d'impression est possible, sur la base des niveaux prédits.

19. Procédé de traitement d'images comprenant les étapes suivantes :

on convertit (S603) des ordres d'impression en premières données de code intermédiaire;
on effectue une opération de rendu des premières données de code intermédiaire les transformant en une image tramée; et
on effectue une opération d'impression par le fonctionnement d'un moteur d'impression (45) utilisant l'image tramée, caractérisé en ce qu'il comprend en outre le fait que le code intermédiaire peut être ajusté de manière dynamique afin de convertir un ordre d'impression par des primitives du code intermédiaire exigeant différentes quantités de ressources;
on détermine (S606) si une opération d'impression est possible, sur la base de l'usage d'une pluralité de ressources d'imprimante que nécessitent les premières données de code intermédiaire; et

on commande (S613) la génération de secondes données de code intermédiaire, lorsque les moyens de détermination déterminent que l'opération d'impression est impossible, de façon à ajuster le code intermédiaire à la pluralité de ressources d'imprimante, et on commande l'étape de rendu et le moteur d'impression de façon que l'opération d'impression soit effectuée en utilisant une image tramée obtenue par l'application d'une opération de rendu aux secondes données de code intermédiaire.

20. Procédé selon la revendication 19, comprenant une seconde étape de détermination pour déterminer si l'opération d'impression est possible, sur la base d'un niveau d'usage de ressources d'imprimante qui est exigé en utilisant les secondes données de code intermédiaire, et dans lequel, si on détermine que l'opération d'impression n'est pas possible, l'étape de commande commande les moyens de rendu de façon que les secondes données de code intermédiaire soient rendues sous la forme d'une image tramée ayant une qualité d'image dégradée.

21. Procédé selon la revendication 19, dans lequel les ressources d'imprimante qui sont prises en considération comprennent l'une au moins des suivantes : la puissance de calcul, la capacité de mémoire et la largeur de bande.

22. Procédé selon la revendication 21, dans lequel les ressources d'imprimante comprennent au moins la mémoire, et dans lequel l'étape de commande génère les secondes données de code intermédiaire de façon à utiliser davantage de puissance de calcul dans le cas où l'usage de mémoire exigé dépasse la ressource de mémoire disponible.

23. Procédé selon la revendication 21, dans lequel l'étape de détermination détermine que l'opération d'impression est possible si l'usage de puissance de calcul exigé ne dépasse pas la ressource de puissance de calcul disponible.

24. Procédé selon la revendication 21, dans lequel les ressources d'imprimante comprennent au moins une ressource parmi la puissance de calcul et la mémoire, et dans lequel l'étape de commande utilise des secondes données de code intermédiaire qui emploient davantage de largeur de bande dans le cas où l'usage de puissance de calcul ou de mémoire exigé dépasse respectivement la ressource d'usage de puissance de calcul ou de mémoire disponible.

25. Procédé selon la revendication 20, dans lequel les ressources d'imprimante comprennent l'une au moins des suivantes : la puissance de calcul, la capacité de mémoire et la largeur de bande.

26. Procédé selon la revendication 19, dans lequel l'une au moins des catégories comprenant les premières et secondes données de code intermédiaire comprend l'un au moins des objets suivants : un objet de grille de bitS, un objet de longueur de plage, un objet de trapèze, un objet de boîte et un objet de codage à frontière fixe.

27. Procédé selon la revendication 26, dans lequel les moyens de rendu appliquent un objet contre un fond avec une fonction d'application, de façon à réaliser un tramage de la représentation.

28. Procédé selon l'une quelconque des revendications 19 à 27, comprenant en outre les étapes suivantes :

on divise une mémoire de façon adaptable en au moins des première et seconde parties, on stocke les premières données de code intermédiaire dans la première partie et on stocke au moins une partie d'une image tramée dans la seconde partie; et

dans lequel l'étape de rendu effectue un rendu des premières données de code intermédiaire stockées dans la première partie de la mémoire en les transformant en une image tramée dans la seconde partie de la mémoire.

29. Procédé selon la revendication 28, dans lequel la première partie de la mémoire stocke les premières données de code intermédiaire en bandes, et dans lequel la seconde partie de la mémoire stocke des images tramées de bandes d'information correspondantes.

30. Procédé selon la revendication 28, dans lequel, lorsqu'il y a une puissance de calcul insuffisante pour effectuer le rendu de la bande d'information en une durée prédéterminée, la bande est pré-tramée par l'étape de rendu dans une troisième partie de la mémoire.

31. Procédé selon la revendication 28, dans lequel, dans le cas où des ressources insuffisantes sont disponibles pour une bande d'information, cette bande d'information est dégradée et certaines autres bandes ne le sont pas.

**32.** Procédé selon la revendication 20, dans lequel l'image dégradée est une image ayant une résolution inférieure.

**33.** Procédé selon la revendication 20, dans lequel l'image dégradée est une image ayant une résolution de couleur inférieure ou un plus petit nombre de demi-teintes.

**34.** Procédé selon l'une quelconque des revendications 19 à 33, dans lequel le moteur d'impression imprime l'information d'impression par balayage à une cadence uniforme.

**35.** Procédé selon la revendication 20, dans lequel la seconde étape de rendu reporte l'opération de rendu des secondes données de code intermédiaire les transformant en une image tramée complète, jusqu'à ce que des opérations d'impression précédentes aient été achevées.

**36.** Procédé selon l'une quelconque des revendications 19 à 35, comprenant l'étape de prédiction d'une pluralité de niveaux d'usage de ressources d'imprimante respectives qui sont exigées pour l'opération d'impression utilisant les données de code intermédiaire, et dans lequel l'étape de détermination détermine si une opération d'impression est possible, sur la base des niveaux prédits.

# FIG. 1

APPLYING A MASK

FRAME

BACKGROUND

CLIPPING REGION

MASK

100

R = ApplFcn ( F, B, M )

# FIG. 2

PDL

COMMUNICATION INTERFACE — 102

PDL INTERPRETER — 104

GRAPHIC LAYER — 105

FONT MODULE — 106

STORAGE POOL — 107

RASTERIZER — 109

EMPTY RASTER

FILLED RASTER

BITMAP RASTER POOL — 110

EP 0 575 134 B1

FIG. 3

# FIG. 4

EP 0 575 134 B1

FIG. 5

F I G.  6

MASK

RASTER OP
MACHINE

ApplFcn
[ opaque ]

INITIAL
RASTER

RESULTING
RASTER

BACKGROUND
TILE

BACKGROUND PLANE

# F I G. 7

EP 0 575 134 B1

# F I G. 8

208 → GL INTERPRETER (220)

220 → MASK GENERATOR (221) — STEP 1 → CLIPPER (225) — STEP 2 → RASTER OP MACHINE (226)

220 → BACKGROUND GENERATOR (222) — STEP 3 → RASTER OP MACHINE (226)

RASTER OP MACHINE (226) — STEP 4 → RASTER POOL (229)

# FIG. 9

FIG. 10

RASTER POOL — 429

RASTER OP MACHINE — 426

CLIPPER — 425

PIPELINE

MASK GENERATOR — 421

COORDINATOR — 440

BACKGROUND GENERATOR — 422

PIPELINE

GL INTERPRETER — 420

208

F I G. 11

F I G. 12

# F I G.  13

PDL

12

CPU 41

11

PRINT ENGINE 45

RENDERER 46

SHIPPER 47

GL TRANSLATOR 42

SHIPPER

DART CODE GENERATOR 43

APPLY

MEMORY ( RASTER POOL ) 44

PAGE INFO

EP 0 575 134 B1

**F I G. 14**

# FIG. 15

INPUT PDL IMAGE DATA — S601

↓

CONVERT TO GL REPRESENTATION — S602

↓

TRANSLATE GL CODE INTO DART REPRESENTATION — S603

↓

BAND THE IMAGE — S604

↓

PREDICT RESOURCE USAGE ( CPU, MEMORY AND BANDWIDTH ) FOR EACH BAND — S605

↓

S606 — RESOURCE USAGE EXCEEDED ?

— NO → S607 MORE GL CODE TO TRANSLATE ?

— YES → REALLOCATE RESOURCE USAGE USING DIFFERENT DART REPRESENTATION — S613

S607 MORE GL CODE TO TRANSLATE ?

— YES (loops back to TRANSLATE GL CODE)

— NO ↓ S608

APPEND BAND RASTERS TO MEMORY — S608

↓

RENDER DART REPRESENTATION BAND-BY-BAND INTO RASTER IMAGES — S610

↓

SHIP RASTER IMAGE TO PRINT ENGINE — S611

↓

BEGIN PROCESSING NEXT PAGE — S612

REALLOCATE RESOURCE USAGE USING DIFFERENT DART REPRESENTATION — S613

↓

RE-PREDICT RESOURCE USAGE — S614

↓

RESOURCE USAGE STILL EXCEEDED ? — S615

— NO (loops back to MORE GL CODE TO TRANSLATE)

— YES ↓

COMPLETE PROCESSING FOR PREVIOUS PAGES ( RENDERING, SHIPPING, ETC. ) — S616

↓

DEGRADE IMAGE : IN SITU RENDERING OF DART REPRESENTATION INTO 300dpi RASTER IMAGE — S617

↓

SHIP RASTER IMAGE TO PRINT ENGINE — S618

↓

BEGIN PROCESSING NEXT PAGE AT 600dpi — S619

49

# F I G. 16

BACKGROUND

INITIAL RASTER

APPLICATION MACHINE

OBJECT

AN "APPLICATION FUNCTION" :
OPAQUE, TRANSPARENT OR
REVERSE

RESULTING RASTER

# F I G. 17

BITMAP

DISP.

BODY

ID LABEL

DISP. | Wd32 x ht

OBJ.

OBJ. TABLE

BAND

x

by

ht

Wd32 x 32

MODE | x | by | ht | ID LABEL | DISP.

# F I G. 18

RUN LENGTH

# F I G. 19

TRAPEZOID

# F I G. 20

BOX

OBJ.

NONE NEEDED

OBJ. TABLE

121
122

x          BAND
by                    124
ht          122
WIDTH

123

| MODE | x | by | ht | NULL | WIDTH |
|------|---|----|----|----|-----|

# F I G. 21

FAST BOUNDARY ENCODING

OBJ.

OBJ. TABLE

INDEX                    SEGm

ID LABEL                            ....

doff    doff

dseg

X
ht
by    SEG 4

131
SEG 1
SEG 2
SEG 3
SEG 4
132
133
134

| MODE | x | by | ht | ID LABEL | dseg | doff |
|------|---|----|----|---------|------|------|